# EUROPEAN PATENT SPECIFICATION

(11) **EP 2 365 915 B1**
(45) Date of publication and mention of the grant of the patent: **27.01.2016**
(21) Application number: 09830938.8
(22) Date of filing: 30.11.2009
(51) Int. Cl.: B60K 6/42, B60K 6/48, B60K 17/28

(54) **HYBRID DRIVE FOR MEDIUM AND HEAVY DUTY TRUCKS**
HYBRIDANTRIEB FÜR LKW DER MITTLEREN GEWICHTSKLASSE UND DER OBEREN GEWICHTSKLASSE
ENTRAÎNEMENT HYBRIDE POUR CAMIONS DE TYPE POIDS-LOURD ET POIDS MOYEN

(30) Priority: 01.12.2008 US 118980 P; 11.05.2009 US 177240 P; 21.08.2009 US 235998 P; 13.10.2009 US 251285 P
(43) Date of publication of application: 21.09.2011
(73) Proprietor: Odyne Systems, LLC, Waukesha, WI 53186 (US)
(72) Inventor: DALUM, Joseph, T., Delafield WI 53018 (US); MAMMEN, JR., William, C., Oconomowoc WI 53066 (US)
(74) Representative: UEXKÜLL & STOLBERG
(86) International application number: PCT/US2009/066151
(87) International publication number: WO 2010/065476

(56) References cited:
- WO-A1-92/01584
- DE-A1- 4 204 384
- JP-A- 2001 008 309
- US-A1- 2005 167 169
- US-A1- 2006 052 215
- US-A1- 2007 095 587
- US-B1- 6 719 080
- US-B2- 7 273 122

## Description

### BACKGROUND OF THE INVENTION

The present disclosure relates to vehicle drive systems. More particularly, the present disclosure relates to hybrid vehicle drive systems employing electric and hydraulic components, according to the preamble of claim 1 and as it is disclosed in US 20070095587A.

Hybrid vehicle drive systems commonly employ at least two prime movers arranged in different configurations relative to a transmission. One known configuration is found in so-called "series-parallel" hybrids. "Series-parallel" hybrids are arranged such that multiple prime movers can power the drive shaft alone or in conjunction with one another.

In a hybrid vehicle drive system, a first and second prime mover (e.g., an internal combustion engine and an electric motor/generator) can be arranged in a parallel configuration and used to provide power to a drive shaft and a power take-off (PTO) shaft through a transmission. PTO shafts are generally used to drive auxiliary systems, accessories, or other machinery (e.g., pumps, mixers, barrels, winches, blowers, etc.). One limitation of this system is that the second prime mover is typically positioned between the first prime mover and the transmission, creating the need to reposition existing drive train components.

Hybrid systems used in larger trucks, greater than Class 4, have typically utilized two basic design configurations - a series design or a parallel design. Series design configurations typically use an internal combustion engine (heat engine) or fuel cell with a generator to produce electricity for both the battery pack and the electric motor. There is typically no direct mechanical power connection between the internal combustion engine or fuel cell (hybrid power unit) and the wheels in an electric series design. Series design hybrids often have the benefit of having a no-idle system, including an engine-driven generator that enables optimum performance, lacking a transmission (on some models), and accommodating a variety of options for mounting the engine and other components. However, series design hybrids also generally include a larger, heavier battery; have a greater demand on the engine to maintain the battery charge; and include inefficiencies due to the multiple energy conversions. Parallel design configurations have a direct mechanical connection between the internal combustion engine or fuel cell (hybrid power unit) and the wheels in addition to an electric motor to drive the wheels. Parallel design hybrids have the benefit of being capable of increased power due to simultaneous use of the engine and electric motor, having a smaller engine with improved fuel economy while avoiding compromised acceleration power, and increasing efficiency by having minimal reduction or conversion of power when the internal combustion engine is directly coupled to the driveshaft. However, parallel design hybrids typically lack a no-idle system and may have non-optimal engine operation (e.g., low rpm or high transient loads) under certain circumstances. Existing systems on trucks of Class 4 or higher have traditionally not had a system that combines the benefits of a series system and a parallel system.

Therefore, a need exists for a hybrid vehicle drive system and method of operating a hybrid vehicle drive system that allows a drive shaft to receive power from at least three components. There is also a need for a hybrid vehicle drive system that allows for the prevention of friction and wear by disengaging unused components. There is a further need for a hybrid vehicle drive system that uses regenerative braking to store energy in at least two rechargeable energy sources. Still further, there is a need for a PTO-based hybrid system. Further still, there is a need for a hybrid system optimized for use with a hydraulic system of the vehicle.

The need for engine idle reduction systems and methods also exists. Sophisticated power train control systems and power management systems required for the operation of a hybrid vehicle drive system can add cost and complexity. Therefore there is a need for an idle reduction system that allows equipment to be powered by one pump. There is also a need for a system that allows for quick recharging from three sources (vehicle engine, external power grid, APU). There is also a need for a system that can provide power to the equipment from two sources simultaneously (vehicle engine and electric motor) during periods when equipment power requirements exceed the output of only an electric motor driven pump. There is yet further a need for a thermal management system for a power source of a hybrid drive system.

There is a further need for a series/parallel design in which the system can operate using either series or parallel configurations depending upon which is most advantageous given operating requirements.

### SUMMARY OF THE INVENTION

An exemplary embodiment relates to a vehicle drive system for a vehicle having the features of claim 1.

Further improvements are laid down in the subclaims

### BRIEF DESCRIPTION OF THE DRAWINGS

Embodiments will be described with reference to the accompanying drawings, wherein like reference numerals denote like components, and in which:
FIG. 1 is a general block diagram of a hybrid vehicle drive system illustrating paths of possible power sources for the drive shaft according to an exemplary embodiment.
FIG. 2 is a general block diagram illustrating the operation of a hybrid vehicle drive system using an auxiliary power unit, second prime mover and accessory components to operate equipment according to an exemplary embodiment.
FIG. 3 is a general block diagram illustrating the operation of a hybrid vehicle drive system with the addition of a second rechargeable energy source according to an exemplary embodiment.
FIG. 4 is a general block diagram illustrating the operation of a hybrid vehicle drive system using a first prime mover providing power to simultaneously charge a first rechargeable energy source and operate equipment according to an exemplary embodiment.
FIG. 5 is a general block diagram illustrating the operation of a hybrid vehicle drive system using a first prime mover providing power to simultaneously charge first and second rechargeable energy sources according to an exemplary embodiment.
FIG. 6 is a general block diagram illustrating the operation of a hybrid vehicle drive system during regenerative braking according to an exemplary embodiment.
FIG. 7 is a general block diagram illustrating the operation of a hybrid vehicle drive system simultaneously charging first and second rechargeable energy sources during regenerative braking according to an exemplary embodiment.
FIG. 8 is a general block diagram of a hybrid vehicle drive system according to another exemplary embodiment, illustrating paths of possible power sources for the drive shaft according to an exemplary embodiment.
FIG. 9 is a general block diagram illustrating the operation of the hybrid vehicle drive system of FIG. 8 during steady driving according to an exemplary embodiment.
FIG. 10 is a general block diagram illustrating the operation of the hybrid vehicle drive system of FIG. 8 when providing additional power to the drive shaft according to an exemplary embodiment.
FIG. 11 is a general block diagram illustrating the operation of the hybrid vehicle drive system of FIG. 8 when using the internal combustion engine to recharge the first rechargeable energy source with the vehicle at rest according to an exemplary embodiment.
FIG. 12 is a general block diagram illustrating the operation of the hybrid vehicle drive system of FIG. 8 when using the internal combustion engine to recharge the first rechargeable energy source while the vehicle is moving according to an exemplary embodiment.
FIG. 13 is a general block diagram of a hybrid vehicle drive system according to another exemplary embodiment, illustrating paths of possible power sources for the drive shaft according to an exemplary embodiment.
FIG 14 is a general block diagram of a hybrid vehicle drive system including a second prime mover coupled to a PTO and an accessory coupled to a transfer case according to an exemplary embodiment.
FIG. 15 is a general block diagram of a thermal management system for a hybrid vehicle drive system in accordance with an exemplary embodiment.
FIG. 16 is a general block diagram of a hybrid vehicle drive system including a combined PTO and electric motor according to an exemplary embodiment.
FIG. 17 is a general block diagram of a hybrid vehicle drive system including a combined PTO, electric motor, and hydraulic motor according to an exemplary embodiment.
FIG. 18 is a general block diagram of a hybrid vehicle drive system that includes a first and second electric motor according to an exemplary embodiment.
FIG. 19 is a general block diagram of a fluid coupling that may be used to couple two components in a hybrid vehicle drive system according to an exemplary embodiment.
FIG. 20 is a general block diagram of a hybrid vehicle drive including several clutches according to an exemplary embodiment.
FIG. 21 is a general block diagram of a hybrid vehicle including a second prime mover and a third prime mover coupled in line according to an exemplary embodiment.
FIG. 22 is a general block diagram of a hybrid vehicle drive including a second prime mover and a third prime mover coupled to the transmission according to an exemplary embodiment.
FIG. 23 is a general block diagram of a hybrid vehicle drive including a second prime mover coupled to the transmission and a third prime mover coupled to the transmission through a PTO according to an exemplary embodiment.

### DETAILED DESCRIPTION OF THE PREFERRED EMBODIMENTS

Hybrid vehicle drive systems according to several possible embodiments are presented. One feature of one exemplary embodiment of the hybrid vehicle drive system is that a drive shaft can be powered singly or in any combination by one or more prime movers and accessories. In some embodiments, prime movers and accessories may themselves be powered by a wide variety of energy sources such as chemical (e.g., gasoline, diesel fuel, etc.), hydraulic, pneumatic, or electrical. Preferred embodiments incorporate hydraulic systems into the hybrid vehicle drive system for optimal energy storage and usage. It is noted that the term motor as used herein refers to a motor/generator or motor/pump and is not limited to a device that performs only motor operations.

Another feature of one exemplary embodiment of the system is that when utilizing a power take-off (PTO) configured to be engaged or disengaged while a transmission is moving, any unneeded drive system components other than a first prime mover can be entirely disconnected from the drive train (in certain embodiments, a gear that is not directly connected can remain meshed with the PTO gear), reducing inefficiencies and wear in situations where the different portions of the system do not need to interact, such as when a drive shaft is solely driven by the first prime mover, or when a vehicle using the system is stationary and a second prime mover and accessory are not being driven by the first prime mover. (In certain embodiments, a gear that is not directly connected can remain meshed with the PTO gear.) Similarly, a clutch may be provided between components (such as between the first prime mover and the transmission) to reduce inefficiencies during regenerative braking by removing components from the system when vehicle braking occurs.

Yet another feature of one exemplary embodiment of the system is that the accessory (e.g., hydraulic pump, pneumatic pump, electric motor, etc.) can be powered singly or in any combination by the first prime mover, the second prime mover, energy from braking, or energy stored in a second rechargeable energy source (e.g., battery, ultra capacitor, hydraulic accumulator, compressed gas storage tank, etc.). The presence of a second rechargeable energy source also can obviate the need for a complicated pump control system when the accessory is a hydraulic pump. If the pump is a variable volume displacement pump, further simplification is possible because a clutch may not be needed between the second prime mover and the pump. Other types of pumps can also be used such as a load sensing pump. According to one exemplary embodiment, with a clutch between the second prime mover and the hydraulic pump, the pump can be an inexpensive gear pump.

Yet another feature of one exemplary embodiment of the system is that a first rechargeable energy source connected to the second prime mover can be recharged in one or more modes. These modes include: the second prime mover using power from the first prime mover; the second prime mover using power from regenerative braking; the accessory, using energy stored in the second rechargeable energy source to operate the second prime mover; an auxiliary power unit connected to the first rechargeable energy source; an engine alternator, when present (the alternator can be increased in capacity to allow for this additional charge while driving or idle); or from an external power source, such as being directly plugged into an external power grid. The second prime mover can draw upon this power stored in the first rechargeable power source before daily operation of the vehicle (e.g., after overnight charging), when the vehicle is stopped, or in other situations. In such situations, the second prime mover would operate the accessory to precharge or pressurize the second rechargeable energy source before the energy is needed, which would provide higher density power storage when the second rechargeable power source is a hydraulic accumulator, among other advantages. A higher density energy storage device is intended to provide more available power at low revolutions per minute (RPM) operation and an overall lower mass system.

Various additional aspects and advantages will become apparent to those skilled in the art from the following detailed description of the embodiments.

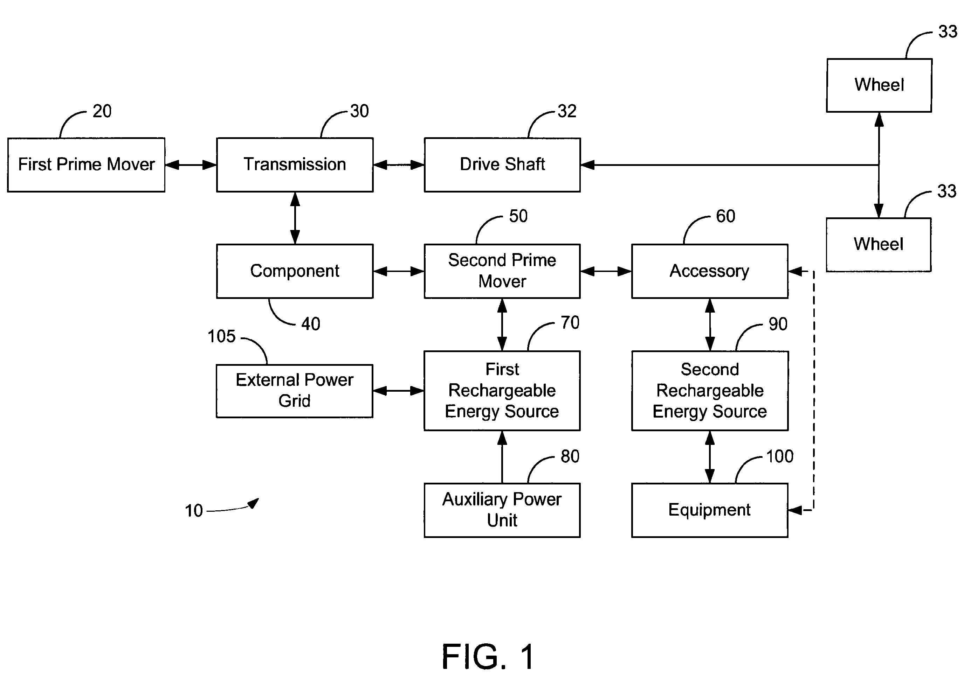

Referring to FIGS. 1-7, hybrid vehicle drive systems according to several exemplary embodiments are shown. Various features of these embodiments can be employed in other embodiments described herein.

As shown in FIG. 1, an exemplary embodiment of a hybrid vehicle drive system 10 can be employed on any type of vehicle. According to one embodiment, the vehicle can be any type of light, medium, or heavy duty truck. In one preferred embodiment, the vehicle is a truck that employs hydraulic systems such as a boom truck. Alternatively, the vehicle can be any type of platform where hybrid systems are employed. The vehicle may have a wide variety of axle configurations including, but not limited to a 4x2, 4x4, or 6x6 configuration.

In one preferred embodiment, the vehicle is a truck such as an International 4300 SBA 4x2 truck. According to one exemplary embodiment, the vehicle includes an IHC MaxxforceDT engine with an output of 255 HP and 660 lbs. of torque. The vehicle further includes an Allison 3500_RDS_P automatic transmission. The vehicle has a front gross axle weight rating (GAWR) of 14,000/12,460 lbs, a rear GAWR of 19,000/12,920 lbs., and a total GAWR of 33,000/25,480. The vehicle includes a hydraulic boom. The vehicle boom has a working height of approximately 54.3 feet, a horizontal reach of 36.0 feet, an upper boom has an extension of approximately 145 inches. The lower boom may travel between approximately 0 degrees and 87 degrees from horizontal. The upper boom may have a travel between approximately -20 degrees and 76 degrees from horizontal. According to an exemplary embodiment, the vehicle may further include a hydraulic platform rotator, a hydraulic articulating jib and winch (e.g., with a capacity of 1000 lbs.), a hydraulic jib extension, hydraulic tool outlets, an on-board power charger providing 5kW at 240 VAC, and electric air conditioning with a capacity of 5,000 BTU. The above referenced power, boom, and types of components are exemplary only.

In another preferred embodiment, the vehicle is a truck such as a 4x2 truck. According to one exemplary embodiment, the vehicle includes an engine with an output of 255 HP and 660 lbs. of torque. The vehicle further includes an automatic transmission. The vehicle has a front gross axle weight rating (GAWR) of 13,000 lbs, a rear GAWR of 20,000 lbs., and a total GVWR of 33,000 lbs. The vehicle includes a hydraulically-operated underdeck air compressor. The air compressor may provide 60 to 185 cfm free air at 100 psig. The compressor may be capable of 90 to 150 psig operation. The compressor may utilize a compressed air storage tank to monitor the demand for air. According to an exemplary embodiment, the vehicle may further include air hose reels, air tool outlets, hydraulic tool outlets, an on-board power charger providing up to 8kW at 240 VAC, and electric air conditioning with a capacity of 13,500 BTU. The above referenced power, air compressor, and types of components are exemplary only.

System 10 includes a first prime mover 20 (e.g., an internal combustion engine, such as a diesel fueled engine, etc.), a first prime mover driven transmission 30, a component 40 (e.g., a power take-off (PTO), a transfer case, etc.), a second prime mover 50 (e.g., a motor, such as an electric motor/generator, a hydraulic pump with a thru-shaft, a compressor, pneumatic blower, vacuum pump, liquid transfer pump, etc.), and an accessory 60 (e.g., a hydraulic pump, such as a variable volume displacement pump, etc.). In certain embodiments, accessory 60 can act as a third prime mover as described below. Transmission 30 is mechanically coupled to component 40. Component 40 is coupled to second prime mover 50. Second prime mover 50 is coupled to accessory 60.

In one preferred embodiment, component 40 is a PTO that can be engaged or disengaged from transmission 30. The PTO can be a street side or curb side PTO. Component 40 may interface with transmission 30 in a way that there is a direct coupling between first prime mover 20, component 40, and transmission 30. Alternatively, component 40 may interface with transmission 30 in a way that the interface directly couples component 40 to the torque converter of transmission 30. The torque converter may be in mechanical communication with mover 20, but rotating at a different speed or may rotate at the same speed as first prime mover 20 if it is locked up. Component 40 (e.g., the PTO) may be mounted on the side of transmission 30, or the rear of transmission 30, or in another location on transmission 30. Transmission 30 may be a manual transmission, automated manual transmission, automatic transmission, or another type of transmission.

A clutch mechanism can be employed to properly engage and disengage component 40 and transmission 30. In another preferred embodiment, component 40 is a PTO that has an internal clutch pack, such as a hot shift PTO. A hot shift PTO can be used when frequent engagements of the PTO are required, often with automatic transmissions. In one embodiment, second prime mover 50 can be operated at the same RPM as first prime mover 20 prior to the engagement of component 40. This is intended to reduce wear on the clutch mechanism if component 40 has a 1:1 ratio of input speed to output speed. If other ratios for component 40 are used, the RPM of first prime mover 20 or second prime mover 50 can be adjusted accordingly prior to engagement to insure that input and output speed match the ratio of the component to reduce wear on the clutch mechanism. For example, the speed of the first prime mover 20 and second prime mover 50 may vary, such that the component 40, which may be in direct or indirect communication with both first and second prime mover, may have gears or other means to transmit power between prime movers with different speeds. In addition, accessory 60 may vary in speed relative to second prime mover 50, or other prime movers, such that gears or other means may be required to transmit power. In one embodiment, a clutch is between the PTO and second prime mover 50, and another clutch is between second prime mover 50 and accessory 60 (e.g., a gear pump). In a preferred embodiment, the clutch between mover 50 and accessory 60 is engaged when both devices are stationary and then the second prime mover 50 is operated to its desired optimal speed. When there is a need to transfer power to the second prime mover 50, the first prime mover 20 is operated with its rotational speed synchronized with second prime mover speed and the clutch between the PTO and the second prime mover 50 is engaged. Power can thus be provided to mover 50 from mover 20 without excessive clutch wear. Once source 70 is charged, the clutch between mover 50 and the PTO can be disengaged and mover 50 can operated from power from source 70 and mover 20 can be slowed or turned off.

In one embodiment, a clutch is between the PTO and second prime mover 50, and another clutch is between second prime mover 50 and accessory 60 (e.g., a fluid motor such as a gear pump). In a preferred embodiment, the clutch between mover 50 and accessory 60 is engaged when both devices are stationary and then the second prime mover 50 is operated at its desired optimal speed. When there is a need to transfer power to the second prime mover 50, the first prime mover 20 is operated with its rotational speed synchronized with second prime mover speed and the clutch between the PTO and the second prime mover 50 is engaged. Power can thus be provided to mover 50 from mover 20 without excessive clutch wear. Once source 70 is charged, the clutch between mover 50 and the PTO can be disengaged and mover can be operated from power from source 70 and mover 20 can be slowed or turned off.

Component 40 can be disengaged from transmission 30 when first prime mover 20 exceeds the maximum operating RPM of any component connected through component 40. For example, component 40 can be disengaged if first prime mover 20 exceeds the maximum operating RPM of accessory 60. Alternatively, all components connected through component 40 can operate throughout the RPM range of first prime mover 20, and component 40 can be engaged continuously. In a preferred embodiment, component 40 can be disengaged during high speed steady driving conditions to reduce friction and wear on system 10. Component 40 can be reengaged once RPM is reduced to be within operating range. Second prime mover 50 can be first operated to synchronize the speed at the interface of the clutch before reengagement to minimize clutch wear. In certain embodiments, second prime mover 50 may disengage at a higher RPM and be reengaged at a lower RPM. Second prime mover 50 can continue to provide power as needed to transmission 30 or take power from transmission 30 and store it in rechargeable energy source 70 when needed to increase overall efficiency of the vehicle.

Alternatively, transmission 30 may be modified to incorporate component 40 and optionally incorporate second prime mover 50 directly into transmission 30. Component 40, embodied as a PTO, may optionally include a PTO shaft extension. An example of a PTO shaft extension is described in U.S. Pat. No. 6,263,749 and U.S. Pat. No. 6,499,548 both of which are incorporated herein by reference. Component 40 can have a direct connection to transmission 30. Component 40 may also interface with transmission 30 in such a way that a single piece shaft is used, directly connecting second prime mover 50 or accessory 60 to gears that interface with transmission 30, eliminating splines at the housing end of component 40. Such a configuration may directly couple second prime mover 50 or accessory 60 to component 40 using a through shaft and be a single unit. Such a configuration may use transmission fluid to lubricate moving parts. The interface between prime mover 50 and accessory 60 (or between accessory 60, if a through shaft pump was used, and prime mover 50) maybe designed so that a pump maybe direct mounted to a flange. Additional support brackets may be used to support the flange and/or pump.

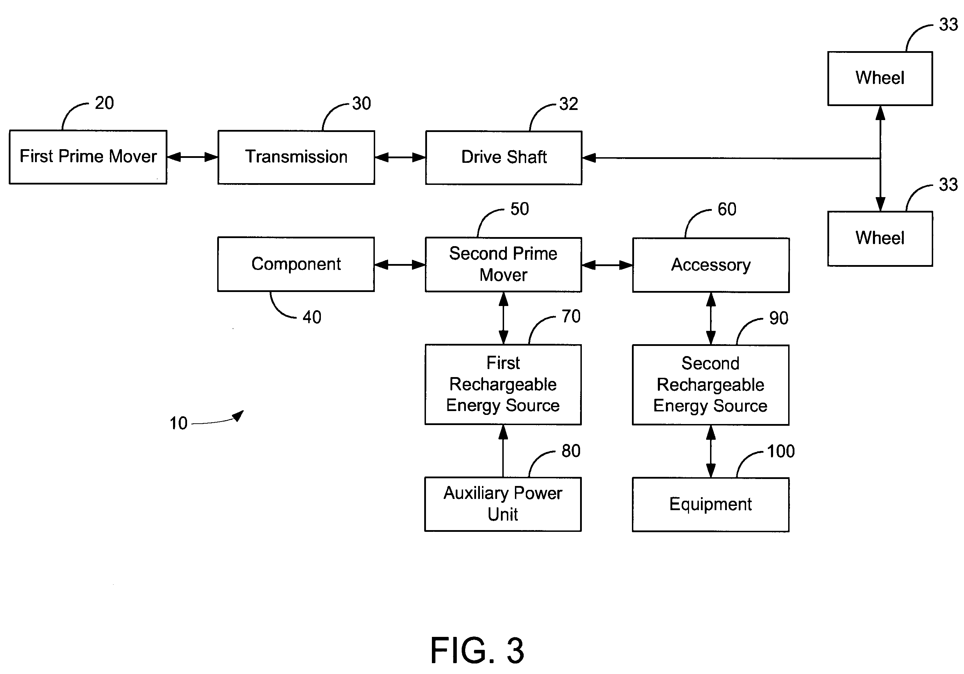

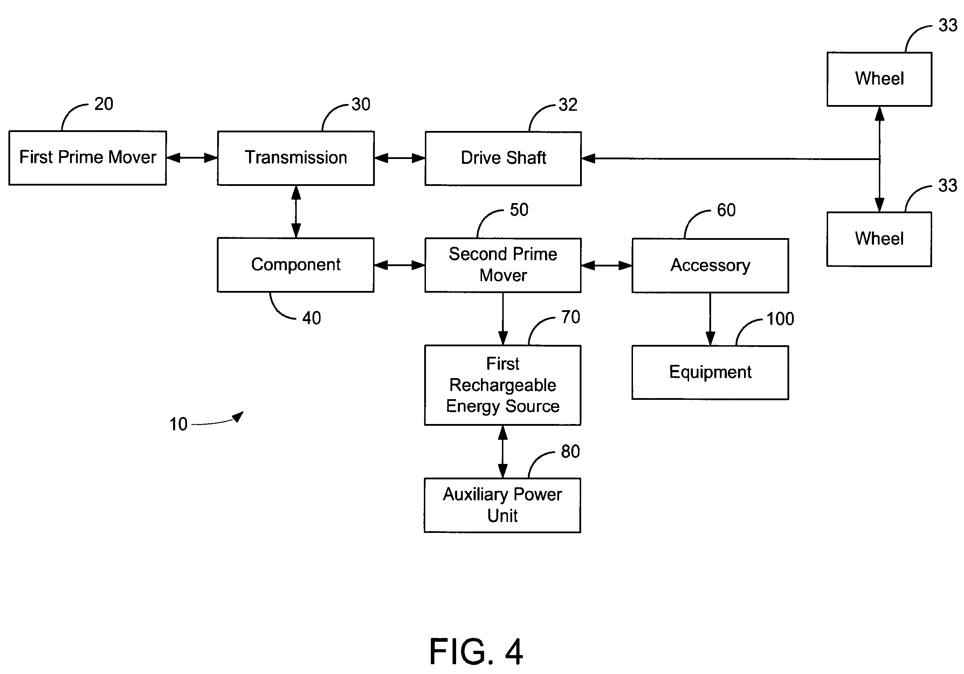

According to one exemplary embodiment, second prime mover 50 is a 50 kW electric motor. When acting as a generator (as shown in FIGS. 3 and 4), second prime mover 50 may generate 30 kW continuously or as much as 75 kW at peak times. The above referenced power parameters are exemplary only.

The nature and arrangement of accessory 60 and second prime mover 50 relative to each other may be changed in various exemplary embodiments. Second prime mover 50 is generally shown in the FIGURES as an electric motor which is coupled between component 40 and accessory 60 (e.g., the electric motor includes a thru-shaft that is coupled to the PTO and the hydraulic pump). However, in one exemplary embodiment, accessory 60 is embodied as a hydraulic motor and includes a thru-shaft coupled to component 40 embodied as a PTO. The through shaft is then also coupled to the shaft of the second mover 50 embodied as an electric motor. Coupling the accessory 60 to the component 40 provides several advantages. Hydraulic pumps with thru-shafts are more common and generally less expensive than thru-shaft motors. Further, accessory 60 is generally smaller than second prime mover 50 and allows for a more compact package when coupled to component 40.

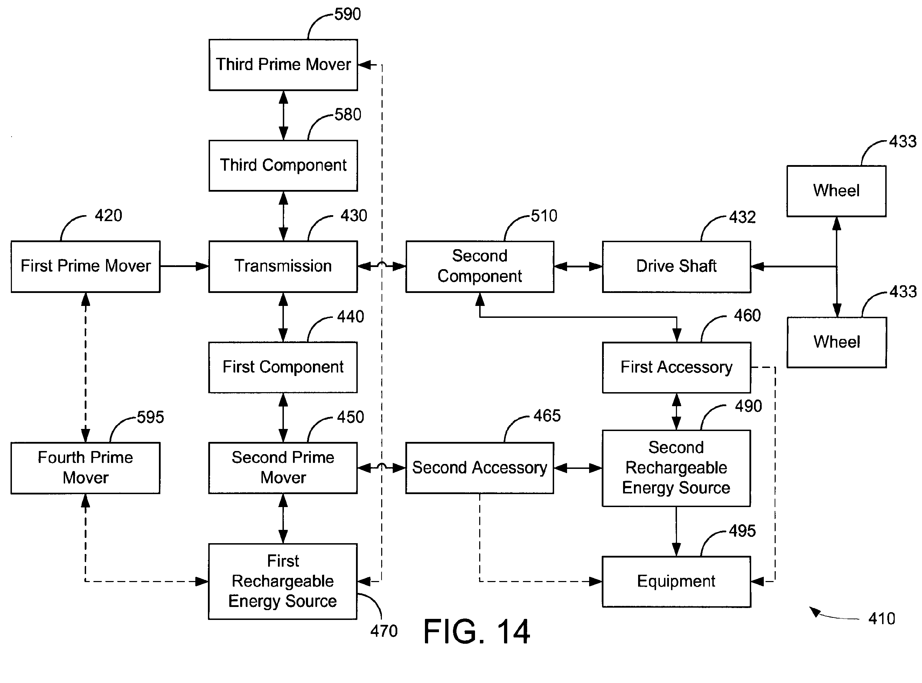

A fluid coupling as shown in FIG. 14 and described in more detail below, may transfer energy between second prime mover 50 and accessory 60, between component 40 and second prime mover 50, or between any suitable components of system 10.

According to one embodiment, system 10 also includes a first rechargeable energy source 70 (e.g., a battery, a bank of batteries, a fuel cell, a capacitive cell, or other energy storage device), an Auxiliary Power Unit (APU) 80 (e.g., an internal combustion engine, possibly fueled by an alternative low emission fuel (e.g., bio-mass, natural gas, hydrogen, or some other fuel with low emissions and low carbon output), and a generator, a fuel cell, etc.), a second rechargeable energy source 90 (e.g. a hydraulic accumulator, ultra capacitor, pneumatic accumulator (compressed gas storage tank), etc.), and onboard or external equipment 100 (e.g., hydraulically operated equipment, such as an aerial bucket, pneumatically operated equipment, such as pavement breakers, etc.).

First rechargeable energy source 70 is coupled to second prime mover 50 and provides power for the operation of second prime mover 50. First rechargeable (e.g., pressurized or rechargeable) energy source 70 may include other auxiliary components (e.g., an inverter provided for an AC motor, a DC-to-DC converter to charge a DC system, an inverter for power exportation to a power grid or other equipment, controllers for motors, a charger, etc). Exportable power may be supplied by the inverter using power from first rechargeable energy source 70, or from the vehicle chassis energy source (such as a 12V battery, which is replenished from first rechargeable energy source 70 using a DC to DC converter), or by some other means. APU 80 is coupled to first rechargeable energy source 70 and provides power to first rechargeable energy source 70.

According to one exemplary embodiment, second renewable energy source 90 is a hydraulic system with a high pressure portion (e.g., an accumulator) and a low pressure component (e.g., a reservoir tank). According to another exemplary embodiment, accessory 60 may be a compressor and second renewable energy source 90 may be a compressed gas storage tank. Second rechargeable energy source 90 is coupled to accessory 60 and provides stored power for accessory 60. Onboard or external equipment 100 can be coupled to accessory 60 or second rechargeable energy source 90 and operate using power from either accessory 60 or second rechargeable energy source 90. In one embodiment, onboard or external equipment 100 is coupled through second rechargeable energy source 90 to accessory 60. According to various exemplary embodiments, APU 80 may also provide power to both second renewable energy source 90 and first rechargeable energy source 70 when high hydraulic loads are required. APU 80 and second renewable energy source 90 may both provide power to hydraulically operated equipment 100.

While component 40 is engaged, second prime mover 50 can operate to provide power to a drive shaft 32 via transmission 30. Second prime mover 50 may be further used to power various on-board components such as compressors, water pumps, cement mixer drums, etc.

In FIG. 1, first prime mover 20 provides power to drive shaft 32 through transmission 30. Second prime mover 50 provides additional or alternative power to drive shaft 32 through component 40 and transmission 30. Drive shaft 32 provides power to two or more wheels 33 used to provide forward and backward momentum to the vehicle. For example, second prime mover 50 can optionally provide the sole source of power to drive shaft 32. Alternatively, second prime mover 50 can provide additional power to drive shaft 32 during vehicle acceleration. When providing power to drive shaft 32, second prime mover 50 can operate using power from first rechargeable energy source 70. According to the various exemplary embodiments of system 10, first rechargeable energy source 70 can be charged or powered by second prime mover 50, APU 80 or another suitable source (e.g., the vehicle alternator, the power grid, etc.).

According to any of the embodiments described in this application, second prime mover 50 may act as a starter/generator through component 40 and transmission 30 for first prime mover 20. Second prime mover 50 can power first prime mover 20 through component 40 in order to help initiate operation of first prime mover 20.

Optional APU 80 can be used to power first rechargeable energy source 70 when the vehicle is driving up a grade, as well as other situations. This use is intended to improve vehicle performance, particularly when the power requirements of the vehicle exceed the power available from first prime mover 20, first rechargeable energy source 70, and second rechargeable energy source 90. The presence of APU 80 is intended to allow for a smaller first prime mover 20. In one embodiment, APU 80 is of a type that produces lower emissions than first prime mover 20. APU 80 is intended to enable a vehicle using system 10 to meet various anti-idle and emission regulations.

In one embodiment, system 10 is configured to automatically engage APU 80 or first prime mover 20 through component 40 or accessory 60 to charge first rechargeable energy source 70 when the stored energy decreases to a certain amount. The permissible reduction in stored energy can be determined based upon a user selectable switch. The switch specifies the method of recharging first rechargeable energy source 70 from an external power grid.

In one embodiment, a user can select between 220-240V recharging, 110-120V recharging, and no external power source available for recharging. For the different voltages, the amount of power that can be replenished over a certain period of time (e.g., when connected to an external power grid overnight) would be calculated. Beyond that amount of power usage, first prime mover 20, or APU 80 is engaged to charge or provide power to first rechargeable energy source 70. If no external power source is available, first prime mover 20 or APU 80 can be automatically engaged during regular finite periods, calculated to minimize idle time. In one embodiment, APU 80 and/or optionally first rechargeable energy source 70 can provide power to an external power grid 105, also known as vehicle to grid (V2G) power sharing. This is intended to provide low-emission power generation and/or reduce requirements to generate additional grid power during peak loads on the grid.

The system 10 may have an interface enabling communications with a "smart grid". A control system may receive a signal (wireless, radio, cellular, satellite, etc.) commanding system 10 to return fully charged or at a higher state charge, for example, to provide vehicle-to-grid power to the grid at times of peak grid utilization. As an example, peak grid utilization may occur at 5 p.m, closely corresponding to the time when vehicles (such as a cable-laying vehicles) return to a garage. Rather than plugging into the grid to draw power at times of peak usage, if the grid is overloaded, large number of vehicles may be used to supply power to the grid (in emergency, or other situation). The vehicle may be provide power to the grid from first rechargeable energy source 70 and/or second rechargeable energy source 90 or may provide power to the grid from first prime mover 20, if in area with ventilation. For example, a vehicle using system 10 may be configured to provide approximately 25 kWh to the grid. A utility fleet with 1000 vehicles could technically deliver about 25 mega-watt hours of energy back into the grid if there was large peak demand after a work shift.

In another embodiment, a user may only select between two settings, one setting to select charging using a grid and the other setting to select charging without using an external power grid. The controller would monitor state of charge of the batteries and control recharging differently for each setting. If no external charging from a power grid is selected, system 10 may allow the state of charge of first rechargeable energy source 70 (batteries) to drop to a threshold (as an example 30%), then the controller would cause either first prime mover 20 or the optional APU 80 to be engaged to charge batteries to a predetermined level (as an example 80%) to minimize the frequency that first prime mover 20 or APU 80 must be started. Or different levels of discharge and recharging may be selected to minimize idle time. System 10 may occasionally recharge batteries to 100% of charge to help condition the batteries. If the user selectable switch indicated system 10 would be charged from an external power grid, the controller may allow the state of charge of first renewable energy source to drop to a threshold (as an example 30%), then the controller would cause either first prime mover 20 or optional APU 80 to be engaged to charge batteries to a predetermined level that is lower (as an example 50%). The lower level allows the external power grid to recharge a greater amount of first rechargeable energy source 70 when vehicle can be plugged in or charged by the external power grid, reducing the fuel consumption of prime mover 20 or optional APU 80.

System 10 may also use a controller to select the most appropriate depletion and recharging method. The controller may use an algorithm which relies upon several inputs, such as the voltage level of previous external charging, or the lack of external charging, or an external signal sent to the controller by a fleet management system or some other external input. For example, if the system has been recharged using 110V external power source three days, the system may automatically use a depletion and recharging methodology optimized for 110V charging. If the voltage of external charging source is 220V in subsequent recharging events (such as subsequent recharging overnight using off-peak power), then the depletion and recharging methodology may switch to be optimal for 220V (allowing greater amounts of depletion, since the external charging can replenish more energy), without necessitating the operator to manually change the depletion and recharging method.

External power grid 105 allows first rechargeable energy source 70 to be recharged with a cleaner, lower cost power compared to recharging first rechargeable energy source 70 with first prime mover 20. Power from an external power grid may be provided at a fraction of the cost of power provided from an internal combustion engine using diesel fuel. According to one exemplary embodiment, first rechargeable energy source 70 can be recharged from an external power grid 105 in approximately 8 hours or less. It should be understood that any of the embodiments of the hybrid vehicle drive system 10 described below may also include a rechargeable energy source (e.g., first rechargeable energy source 70) that is able to be charged from the external power grid 105. By including rechargeable energy sources that are able to be charged from a wide variety of sources (e.g., from prime movers 20 and 50, from APU 80, from external power grid 105, etc.), hybrid vehicle drive system 10 is adaptable to a wide variety of situations and can operate in a manner to reduce noise, fuel consumption, and/or emissions.

In one embodiment, second rechargeable energy source 90 is utilized, and provides power to accessory 60. Additional or alternative power can be provided to drive shaft 32 by accessory 60. For example, accessory 60 can provide power to drive shaft 32 until second rechargeable energy source 90 is discharged. Alternatively, accessory 60 can provide additional power to drive shaft 32 during vehicle acceleration. Accessory 60 provides power to drive shaft 32 through second prime mover 50, component 40, and transmission 30. The combination of power provided to drive shaft 32 by second prime mover 50 and accessory 60 is intended to allow for the use of a smaller first prime mover 20 which provides the best use of stored energy and reduces the overall system mass. In another embodiment, accessory 60 only receives power from second prime mover 50 or from first prime mover 20 through component and does not provide power to drive shaft 32. Accessory 60 may power equipment 100 directly and second rechargeable energy source 90 can be eliminated. In one embodiment, energy from equipment 100 can be recovered in source 90 or accessory 60. For example, when a boom is lowered, power can be provided from the boom to the hydraulic system.

In one exemplary embodiment, an optional clutch can be coupled between first prime mover 20 and accessory 60 or between component 40 and second prime mover 50. The clutch is disengaged when the vehicle is stationary so second prime mover 50 can turn accessory 60 without unnecessarily driving component 40.

A variety of control systems can be utilized to control the various components (clutches, motors, transmissions, etc.) in system 10. Electronic control systems, mechanical control systems, and hydraulic control systems can be utilized. Such control systems can include sensors and control devices coupled to each component. The control devices can include, switches, clutches, solenoids, converters and other control devices for implementing the functions described herein. In addition, a controller can be provided to indicate a request to operate an accessory or other equipment. In one embodiment, a controller similar to the controller in U.S. Patent No. 7,104,920 incorporated herein by reference can be utilized. Preferably, the controller is modified to communicate by pneumatics (e.g., air), a wireless channel, or fiber optics (e.g., light) for boom applications and other applications where conductivity of the appliance is an issue.

The control system can utilize various input criteria to determine and direct the amount of power required or to be stored, the input criteria can input operator brake and acceleration pedals, accessory requirements, storage capacity, torque requirements, hydraulic pressure, vehicle speed, etc. According to an exemplary embodiment, the input criteria may be an external input, such a from a fleet management system or from a smart grid interface or control signal.

A control system may control the torque and power output of second prime mover 50 and accessory 60 so that component 40, second prime mover 50 and accessory 60 are operated within the allowable torque and power limitations of each item so that the sum of second prime mover 50 and accessory 60 do not exceed component 40 or exceed capacity of transmission 30, such as capacity of transmission power takeoff drive gear rating or exceed capacity of transmission maximum turbine torque on an automatic transmission. Optionally the controller may monitor and control additional input torque from the prime mover, or input torque of the prime mover after multiplication by the torque converter, along with that from other prime movers or accessories to ensure that the turbine torque limit is not exceeded or other internal torque ratings of components within an automatic transmission or an autoshift manual transmission, or a manual transmission. The torque and power output of second prime mover 50 and accessory 60 may also be controlled using an input from the driver and/or from a power train control system. If two components are used as described in other embodiments, the torque and power output of the second and third prime mover and optional accessory or accessories may be controlled so that the transmission power takeoff drive gear rating with two power takeoffs is not exceeded or that the capacity of transmission maximum turbine torque on an automatic transmission, or other toque rating of an internal component within a transmission of different kind, such as an autoshift manual or manual transmission is not exceeded.

According to other exemplary embodiments, a control system may be used for other purposes (e.g., coupling component 40 to transmission 30; monitoring the charge status of first rechargeable energy source 70 and second rechargeable energy source 90; monitoring and managing the thermal status of various components (e.g., prime movers, rechargeable energy sources, electronics, etc.); operating first prime mover 20, second prime mover 50, and accessory 60 to replenish energy in first rechargeable energy source 70 and second rechargeable energy source 90 and/or supply power to equipment 100; operate APU 80 as needed; or control other functions). Information on the status of the system, such as operating efficiency, status of rechargeable energy sources, and certain operator controls may be displayed or accessed by the driver.

A control system may also turn off first prime mover 20 if the vehicle is stationary for a set period of time (i.e., five seconds or more) when the brake is applied, or when other conditions are met. A control system may then command first prime mover 20 to turn on if the brake is no longer applied, or the accelerator pedal is depressed, or other conditions are met. Component 40, or other components, may transmit power to prime mover 20, such as an internal combustion engine (e.g. diesel engine). A control system may place transmission 30 into neutral, or if transmission 30 is an automatic transmission, may place transmission 30 into a reduced engine load mode to allow first prime mover 20 to be powered without causing additional load on system 10 (e.g., due to torque converter movement). Alternatively, second prime mover 50 and/or accessory 60 (if an accessory that provides power is present) may power first prime mover 20 through component 40 and initiate movement of the vehicle by powering first prime mover 20 with transmission 30 in gear and providing power to the drive train and wheels 33. One or more components 40 (e.g., PTOs), additional prime movers and/or accessories may be used to power first prime mover 20. As an example, two components 40 in direct or indirect mechanical communication with transmission 30 may be used to transfer power from one or more electric motors, hydraulic motors or other secondary prime movers to prime mover 20 to power first prime mover 20, or assist in the initiation of operation of first prime mover 20.

A control system may also monitor the settings or status of various components or controls on the vehicle, such as transmission 30, a parking brake or a hood switch. If conditions are met, (e.g. ignition key is in the operating position, the transmission is in neutral, the parking brake is engaged and the hood switch indicates the hood is closed), then a signal may be sent to turn off the first prime mover 20 after a period of time (i.e., 5 minutes or less). First rechargeable energy source 70 can then be used to power HVAC, lighting, or other loads normally powered by first prime mover 20. A separate switch, may be activated manually (e.g. PTO switch), and may send a signal to provide power for additional equipment on the vehicle, such as an aerial device, digger derrick or other equipment that can be operated through energy from first rechargeable energy source 70, from second rechargeable energy source 90, or from a combination of both rechargeable sources.

A control system may monitor system 10 and, based on the behavior of the various components of system 10 and the power flow through system 10, determine in which mode of operation system 10 should be in (e.g., a propulsion mode, an idle reduction mode, a regenerations mode, etc.). A user is then not required to manually change the mode of operation of system 10 by another means such as a manual switch.

A control system may adapt system 10 such that a variety of different components may be utilized, increasing the modularity of system 10. For instance, first rechargeable energy source 70 may be a wide variety of storage systems, such as battery systems with a range of characteristics based on chemical composition (e.g., lithium ion batteries, nickel metal hydride batteries, lead acid batteries, etc.), storage capacity, voltage, temperature control requirements, physical size, etc. A control system may monitor such parameters as the voltage of first rechargeable energy source 70 and control the flow of power through system 10 to compensate.

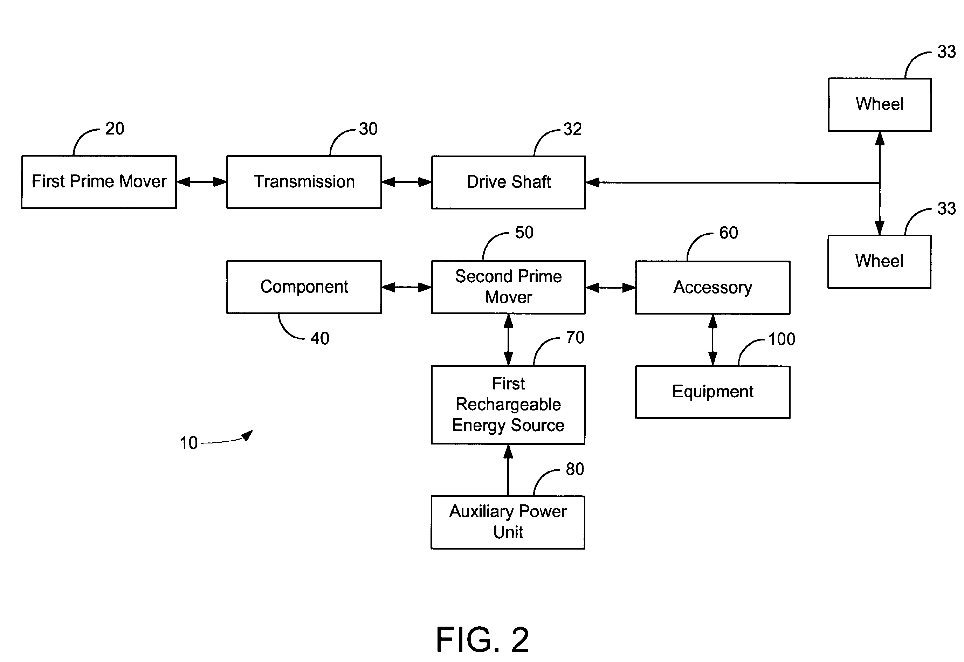

Referring to FIG. 2, an exemplary operation of system 10 is shown. Component 40 is disengaged from transmission 30. APU 80 charges or provides power to first rechargeable energy source 70 when necessary. APU 80 can include a generator powered by an internal combustion engine. The generator can be connected to first rechargeable energy source 70 through a power converter, AC/DC power inverter or other charging system. First rechargeable energy source 70 provides power to second prime mover 50. The operation of second prime mover 50 operates accessory 60. Accessory 60 provides power to on-board or external equipment 100. First rechargeable energy source 70 and/or APU 80 may provide all the power for system 10 when the vehicle is stationary and first prime mover 20 is turned off (e.g., in an idle reduction system). If second prime mover 50 is not coupled to drive shaft 32 and instead provides power to accessory 60 (e.g., in an idle reduction system), system 10 may include a simplified control and power management system.

According to another exemplary embodiment, component 40 may be mechanically coupled to and first prime mover 20 may be operated periodically to provide power to second prime mover 50 through transmission 30 and component 40. Second prime mover 50 recharges first rechargeable energy source 70 and/or powers accessory 60. Accessory 60 can recharge second rechargeable energy source 90 or operate other equipment.

According to another exemplary embodiment, system 10 is configured as an idle reduction system that can provide power to vehicle loads such as HVAC, computers, entertainment systems, and equipment without the need to idle the engine continuously. Accordingly, system 10 uses an electric motor (e.g., prime mover 50) to power a hydraulic pump (e.g., accessory 60) for the operation of hydraulic equipment (e.g., aerial buckets, hydraulically powered compressors, etc.). Alternatively, the electric motor may directly power a compressor. The electric motor can be configured to only operate when there is a demand for hydraulic flow or the need to operate other mechanically coupled equipment to conserve energy within first rechargeable energy source 70. The electric motor can be activated by a controller that receives a signal sent through fiber optics or a signal sent through other means.

In one embodiment, mover 20 is not engaged with component 40 when mover 50 is used to power a pump or other mechanically coupled equipment 100. While component 40 (PTO) is not engaged, the PTO may be modified to allow a shaft connected to the PTO or components within the PTO to spin with low resistance. A PTO can be chosen with a feature that normally limits movement of the PTO when not engaged, this feature can be disabled when the electric motor is used to power the hydraulic pump. This concept also applies to "operating mode" for hybrid system process discussed below with reference to FIGS. 3 and 4. This type of idle reduction can be used when the vehicle is stationary.

Batteries (e.g., rechargeable energy source 70) provide energy for the electric motor. After the batteries are depleted, an external power grid is used to recharge the batteries.

If the rechargeable energy reserve is large enough, the electric motor (mover 50) may operate continuously, eliminating the need for a controller to turn motor on and off based upon demand. Such a system may be coupled to a variable volume displacement pump to reduce flow when demand for hydraulic flow is low, resulting in lower consumption of power from the rechargeable energy source. This same method of continuous operation can also be used for hybrid system configurations.

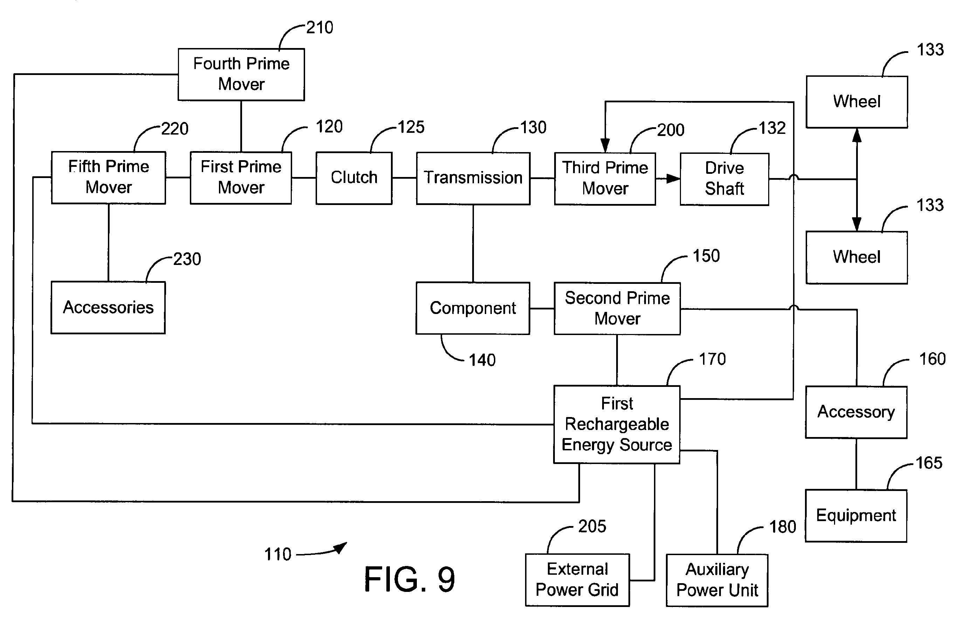

Depending upon the battery system, the batteries may be thermally corrected during charging, during operation, or while the vehicle is not powered. Thermal correction may be needed if the temperature of the battery exceeds a certain threshold. A cooling system, either external to the vehicle or internal to the vehicle may be used, such that coolant is circulated to reduce heat or the battery case can be ventilated with cooler air to dissipate heat, possibly with a powered ventilation system. A second pump may also be connected to a PTO (as shown in FIG. 9). First prime mover 20 may be started and used to recharge by engaging component 40 to transmission and operating second prime mover 50 as a generator to recharge first rechargeable energy source batteries. If there is insufficient energy to operate the electric motor driven hydraulic pump, the vehicle engine is started, PTO engaged and the second pump is used to power the equipment. Further, the second pump can be used when the hydraulic power requirements exceed the power output of the electric motor coupled to the hydraulic pump. Alternatively, prime mover 50 could directly power the first accessory (hydraulic pump) and the second prime mover could be made not to operate as a generator. Not operating second prime mover as a generator may reduce system complexity and reduce cost.

In another embodiment, first rechargeable energy source 70 provides power to electrical systems of the vehicle such as "hotel loads" (e.g., HVAC, lighting, radio, various electronics, etc.). In yet another embodiment, first rechargeable energy source 70 charges a main crank battery of the vehicle. The main crank battery can be isolated from system 10. First rechargeable energy source 70 may also be used in other configurations that use 100% electric propulsion for certain periods to power additional vehicle systems such as power steering, brakes and other systems normally powered by first prime mover 20.

In yet another embodiment, second prime mover 50 provides power to external devices directly or through an additional rechargeable energy source and an associated inverter. Utilizing second prime mover 50 to power external devices is intended to lessen the need for an additional first prime mover 20 powered generator.

In yet another embodiment, a sophisticated control system (e.g., a pump control system utilizing fiber optics, etc.) can be used to control the operation of accessory 60. In yet another embodiment, accessory 60 is a variable volume displacement pump. Accessory 60 can operate continuously, only providing flow if there is a demand. When no demand is present, accessory 60 provides little or no additional friction or resistance within the system.

Accessory 60 may be composed of multiple accessories coupled to one another. As an example, accessory 60 may include multiple hydraulic variable displacement pumps connected with a through shaft, such that each pump may supply power to a separate hydraulic circuit, or used together in a combined hydraulic circuit. This is particularly advantageous for hydraulic equipment that may operate using lower power for certain operations, such as a digger derrick when boom movement functions are operated, and higher power for certain other operations, such as a digger derrick when digging functions are operated. By using multiple pumps, sometimes referred to as tandem pumps or piggyback pumps, more efficient operation is possible. A clutch can be used to selectively engage one or more pumps. During operation, the first rechargeable energy source supplies energy for the second prime mover that operates accessory 60. Accessory 60, using multiple pumps, can operate more efficiently by using one pump to supply power for commonly used lower power functions, while the higher power additional pump remains in a very low flow mode, consuming little energy. When higher flow is needed for equipment, the second (or other additional pumps) can supply additional flow to a separate hydraulic circuit(s), or in combination with the first pump, to supply extra power. By only utilizing the pumps that are needed, system 10 can operate more efficiently, resulting in lower power requirements for second prime mover, and lower use of stored energy in first rechargeable energy source. If a second rechargeable energy source is used, such as an accumulator, the available energy in the accumulator is also used more efficiently. Accessory 60 may also be composed of other hydraulic configurations, including digital displacement hydraulic system and distributed hydraulic circuits (e.g. such as those supplied by Husco International and Incova Technologies, Inc.).

Referring to FIG. 3, another exemplary operation of system 10 is shown. First rechargeable energy source 70 and/or APU 80 may provide power for system 10 when the vehicle is stationary and first prime mover 20 is turned off (e.g., in an idle reduction system). For example, as shown in FIG. 3, energy source 70 may power accessory 60. In one embodiment, second rechargeable energy source 90 is utilized. Accessory 60 stores energy in second rechargeable energy source 90, as shown. Second prime mover 50 is engaged to operate accessory 60 (e.g., a hydraulic pump) when the stored energy in second rechargeable energy source 90 (e.g., a hydraulic accumulator or a pneumatic accumulator) is reduced to a predetermined level. The utilization of second rechargeable energy source 90 is intended to reduce operation time of accessory 60. Accessory 60 only needs to operate to maintain energy in second rechargeable energy source 90. On-board or external equipment 100 (e.g., any hydraulic equipment) is powered by second rechargeable energy source 90. In one embodiment, a clutch mechanism is used to disengage accessory 60 from second prime mover 50 during vehicle travel when second rechargeable energy source 90 has been fully charged. This is intended to reduce friction on system 10 when second prime mover 50 is needed, but accessory 60 is not. Second rechargeable energy source 90 can provide hydraulic power to equipment 100 at a constant system pressure through a pressure reducing valve.

Alternatively, second rechargeable energy source 90 and two hydraulic motor/pump units are coupled together to provide constant system pressure and flow. The first unit (e.g., a hydraulic motor) receives high pressure flow from second rechargeable energy source 90. The first unit is coupled to a second unit (e.g., a pump) which supplies hydraulic power to equipment 100 at a lower pressure. Both hydraulic second rechargeable hydraulic circuit and low pressure hydraulic equipment circuit have a high pressure and a low pressure (reservoir or tank) sections. A control system may be utilized to maintain constant flow in the low pressure hydraulic equipment circuit as the high pressure flow from the second rechargeable source (accumulator) reduces or varies. The advantage of this configuration is that the energy from the high pressure accumulator is more efficiently transferred to the equipment. This configuration also allows independent hydraulic circuits to be used for the propulsion system and for equipment 100. The independent hydraulic circuits allow for fluids with different characteristics to be used in each circuit. Further, a hydraulic circuit that may be susceptible to contamination (e.g., the equipment circuit) can be kept separate from the other hydraulic circuit (e.g., the propulsion circuit).

In another embodiment, second rechargeable energy source 90 is utilized, and accessory 60 is a hydraulic pump. Second rechargeable energy source 90 can include a low pressure fluid reservoir and a hydraulic accumulator or a source for low pressure gas (e.g. atmosphere) and a compressed gas storage tank. The utilization of second rechargeable energy source 90 obviates the need for a sophisticated pump control system and the associated fiber optics; instead a simpler hydraulic system can be used (e.g., an insulated aerial device with a closed center hydraulic system and a conventional control system, etc.).. If the second rechargeable energy source 90 is a gas compressor with compressed gas storage tank, a pressure switch can be added to shut down the compressor operation when the pressure reaches a predetermined value in order to preserve the first rechargeable energy source 70. If the speed of accessory 60 slows due to depletion of on-board power sources, accessory 60 can operate longer to maintain energy in second rechargeable energy source 90. This is intended to minimize any negative effects on the operation of equipment 100. According to one exemplary embodiment, second prime mover 50 is an AC motor and turns at generally a constant rate regardless of the output volume of accessory 60 (e.g., to create two or more different levels of flow from accessory 60).

However, in some scenarios, second prime mover 50 may provide power to accessory 60 and the speed of second prime mover 50 may be varied by a controller. For example, the speed of second prime mover 50 may be varied to reduce the flow of fluid from accessory 60 (e.g., for two speed operation of an aerial device where lower hydraulic flow may be desirable for fine movement of the boom).

In one embodiment, system 10 can provide the advantage of allowing a vehicle to operate at a work site with fewer emissions and engine noise by using an operating mode. In an operating mode (as shown in FIGS. 3 and 4), first prime mover 20 (e.g., an internal combustion engine, such as a diesel fueled engine, etc.) is turned off and component 40 (PTO) is disengaged from transmission 30, and component 40 when disengaged is able to spin freely with little resistance, and power from first renewable energy source 70 and second renewable energy source 90 are used to operate on-board or external equipment 100 and electrical systems of the vehicle such as "hotel loads" (e.g., HVAC, lighting, radio, various electronics, etc.). According to another exemplary embodiment, second renewable energy source 90 may be optional and first renewable energy source 70 may directly supply power to equipment 100. According to one exemplary embodiment, first renewable energy source 70 has a capacity of approximately 35 kWh and is configured to provide enough power to operate the vehicle for a full day or normal operation (e.g., 8 hours).

Referring to FIG. 4, yet another exemplary operation of system 10 is shown. When APU 80 is out of fuel, APU 80 is not used, or APU 80 is not present, first rechargeable energy source 70 can be recharged by other components of system 10 (in addition to other methods). First prime mover 20 and second prime mover 50 are preferably operated and synchronized to the same speed (e.g., input and output mechanical communication through component 40 is a one to one ratio). Alternatively, first prime mover 20 can be operated at a different speed than second prime mover 50, such as via a gear ratio. For example, mover 50 may operate at a higher speed than mover 20 and component 40 can have a variety of gear ratios to drive mover 50 at a multiple of the speed of mover 20. Component 40 is preferably engaged to transmission 30 and may have more than one gear ratio. First prime mover 20 provides power to second prime mover 50 through transmission 30 and component 40. Adjustments to second prime mover 50 speed is made if the ratio between first prime mover 20 and second prime mover 50 is not one to one to minimize wear of the clutch in component 40 or to speed of first prime mover 20. Operation of second prime mover 50 recharges first rechargeable energy source 70 to a predetermined level of stored energy.

This method of recharging first rechargeable energy source 70 is intended to allow continuous system operation in the field without the use of external grid power. This method is further intended to allow continuous operation of equipment 100 during recharging of first rechargeable energy source 70. This method can also be used when first prime mover 20 is operating but the vehicle is not moving. Some of the power from first prime mover 20 that is usually lost during idling can be stored in first rechargeable energy source 70. This increases the efficiency of the vehicle and may be enhanced further by placing transmission 30 into neutral or into a reduced engine load mode if transmission 30 is an automatic transmission with a torque converter that allows the torque converter in transmission 30 to spin more freely without causing the vehicle to move.

The energy may be stored in first rechargeable energy source 70 and/or second rechargeable energy source 90 (if a second rechargeable source is available) when the vehicle is moving, as may be required if the vehicle is operated in hilly terrain, or other conditions requiring a higher level of stored energy.

Notification to system 10 to maintain a higher level of energy in rechargeable energy source 70 or sources may originate from a controller that uses an algorithm or other means to assess inputs such as topographical and road grade information, current vehicle position, traffic conditions or other information.

While charging first rechargeable energy source 70, second prime mover 50 simultaneously operates accessory 60. Accessory 60 provides power to on-board or external equipment 100. After first rechargeable energy source 70 has been recharged, component 40 is disengaged from transmission 30. Operation of accessory 60 can continue without the use of first prime mover 20 as shown in FIG. 2. Alternatively, with component 40 engaged, operation of accessory 60 can continue powered in part or in full by prime mover 20. This may be useful for example, if there is a failure in one of the other components that powers accessory 60. This may also be useful if the power demand from accessory 60 exceeds the power available from second prime mover 50. According to one exemplary embodiment, first prime mover 20 provides supplementary power to or all of the power to equipment 100 (e.g. a digger derrick that may require higher hydraulic flow during digging operations). Using first prime mover 20 to provide supplementary power to equipment 100 during intermittent periods of high power requirement allows system 10 to include a smaller second prime mover 50 that is able to provide enough power for the majority of the equipment operation. The control system may receive a signal from the equipment indicating additional power is required beyond that provided by second prime mover 50. Such a signal may be triggered by the operator, by activation of a function (e.g., an auger release, etc.), by demand in the circuit or component above a predetermined threshold, or by other means. Alternately first rechargeable energy source 70 can be recharged without accessory 60 providing power, or if accessory 60 is absent.

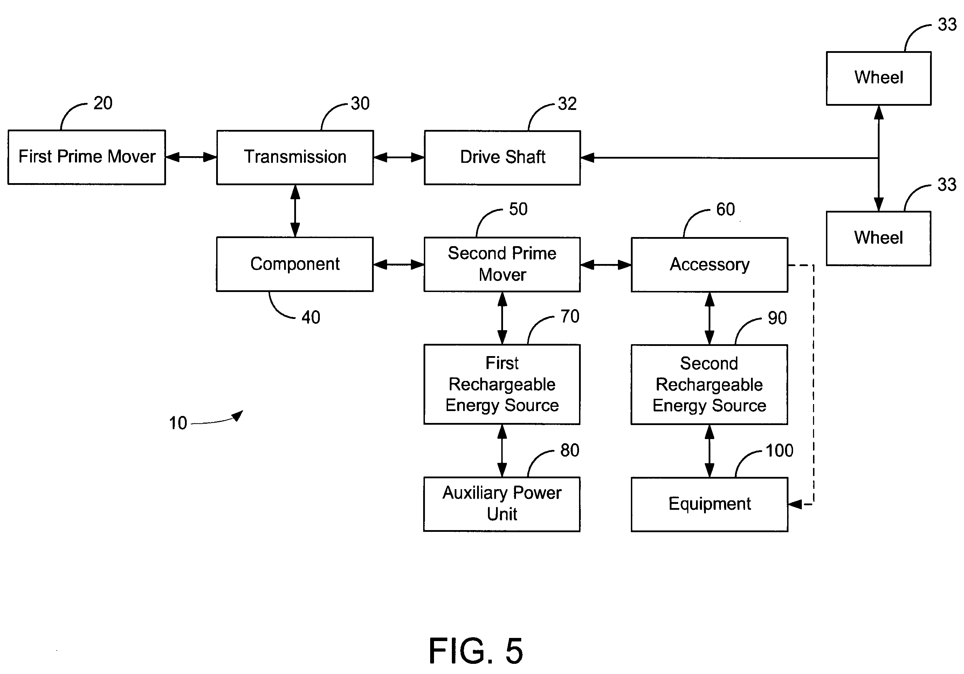

Referring to FIG. 5, yet another exemplary operation of system 10 is shown. Second rechargeable energy source 90 is utilized. Accessory 60 provides power to second rechargeable energy source 90. In one embodiment, on-board or external equipment 100 (e.g., hydraulic cylinders, valves, booms, etc.) is coupled to second rechargeable energy source 90, and can be powered by second rechargeable energy source 90. External equipment 100 may also be operated directly by accessory 60 without the use of a second rechargeable energy source 90. This method of recharging first rechargeable energy source 70 and second rechargeable energy source 90 is intended to allow continuous system operation in the field without the use of external grid power. This method is further intended to allow continuous operation of equipment 100 during recharging of first rechargeable energy source 70 and second rechargeable energy source 90.

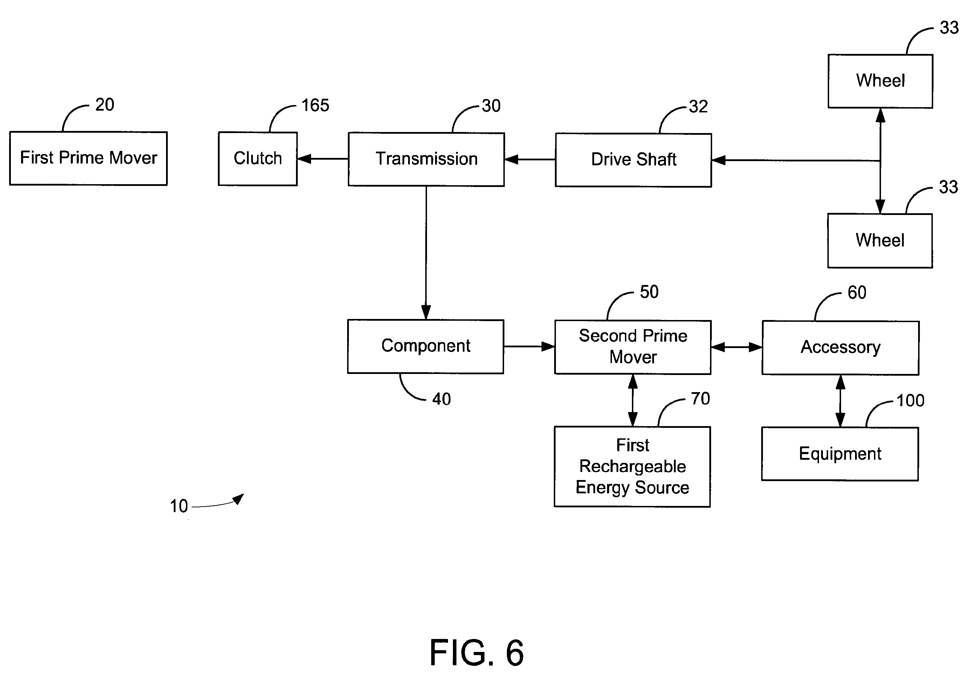

Referring to FIG. 6, yet another exemplary operation of system 10 is shown. In one embodiment, a clutch or other mechanism is used to disengage first prime mover 20 from transmission 30 during vehicle braking. This is intended to maximize the regenerative energy available from vehicle braking. The forward momentum of the vehicle provides power from wheels 33 to transmission 30. Transmission 30 may be reduced to a lower gear to increase the RPMs and increase the amount of energy transferred to second prime mover 50. Second prime mover 50 can operate to charge first rechargeable energy source 70 and help slow the vehicle according to principles of regenerative braking. Disengaging first prime mover 20 from transmission 30 further reduces the amount of energy transferred back to first prime mover 20 during braking and reduces the need for engine braking. The control system for the hybrid components may also monitor chassis anti-lock brake system (ABS) activity. If the chassis anti-lock brake system has sensed possible wheel lock-up and has become active, possibly due to low traction or slippery road conditions, then hybrid regenerative braking is suspended by the hybrid control system. The regenerative braking system may be disabled as soon as ABS is active and may remain off for only as long as the ABS is active, or alternatively regenerative braking may remain off for a period of time after ABS is no longer active or regenerative braking may remain off for the remainder of the ignition cycle to eliminate the chance that regenerative braking could adversely affect vehicle handling in low friction, slippery road conditions during the current ignition cycle. At the next ignition cycle, regenerative braking may be reactivated.

The control system may also monitor the activation of multi-axle drive train, such as the activation of 4x4 or 6x6 drive. Such activation often occurs in low traction conditions, such as snow or mud. If such activation is recognized, regenerative braking, or other functions may be disabled. The system may also be configured so that activation of 4x4 or multi-axle drive disables the hybrid system, without the need for a control system to monitor a circuit.

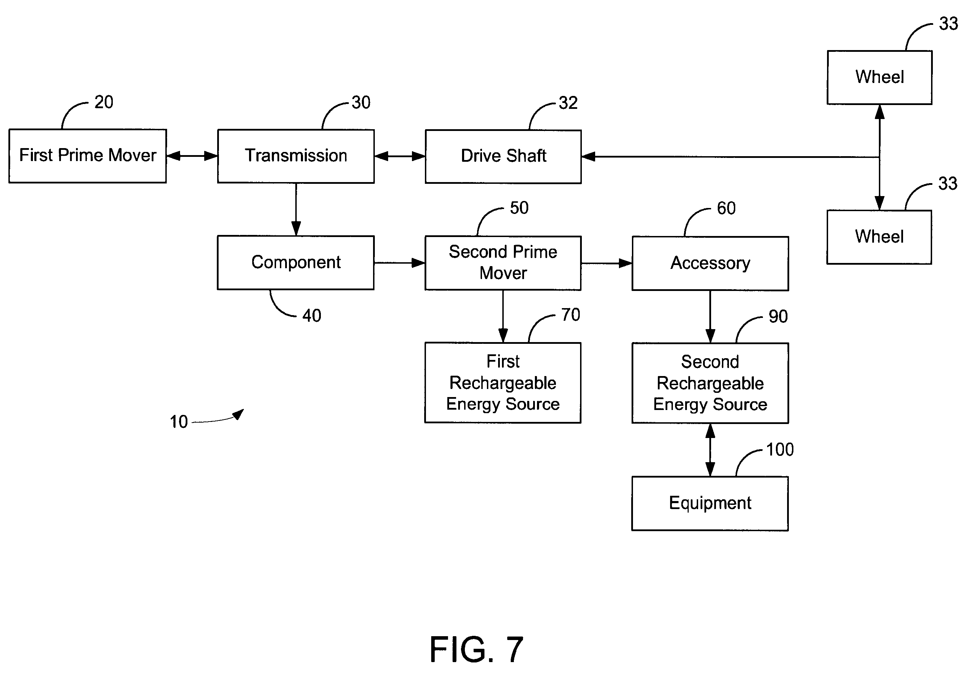

Referring to FIG. 7, yet another exemplary operation of system 10 is shown. Second rechargeable energy source 90 is utilized. As mentioned above, during vehicle braking, first rechargeable energy source 70 is charged through operation of second prime mover 50. Accessory 60 can operate to further slow the vehicle, and store energy in second rechargeable energy source 90, if second rechargeable energy source 90 is not fully charged. In this manner, regenerative braking can be used to simultaneously charge multiple energy storage devices of system 10. This is intended to allow recharging of both energy storage devices through braking during vehicle travel, among other advantages. If first rechargeable or second rechargeable energy storage is full, energy can be dissipated during braking using chassis brakes, or other means, such as dissipating electrical energy generated from second prime mover through a resistor and/or mechanical energy from accessory 60 through a hydraulic circuit that offers resistance, such as a relief valve. A clutch can be optionally included between first prime mover 20 and transmission 30 to further improve regenerative braking. First rechargeable energy source 70 and/or second rechargeable energy source 90 can also be recharged through operation of first prime mover 20. Transmission 30 may be a transmission of any type, (i.e., an automatic transmission with a torque converter). During braking events or in situations when power from first prime mover 20 is not required while the vehicle is in motion and the vehicle has an automatic transmission, it may be advantageous to lock the torque converter and possibly up shift transmission 30 if component 40 or additional components are coupled to first prime mover 20. Locking the torque converter transmits power more efficiently during braking events to components that are directly or indirectly coupled to the crank shaft or to the pump section of transmission 20. If component 40, or other components are not directly coupled to first prime mover 20, such as if component 40 is coupled to the turbine section of transmission 30 or section of transmission 30 with a planetary gear, it may be advantageous to keep the torque converter unlocked during braking or when power from first prime mover 20 is not required while the vehicle is in motion. If the vehicle has a manual transmission or automated shift manual transmission, transmission 30 may also be shifted to a higher gear to increase the rotational speed of component 40 and second prime mover 50 or other additional prime movers and accessories in order to improve regenerative braking.

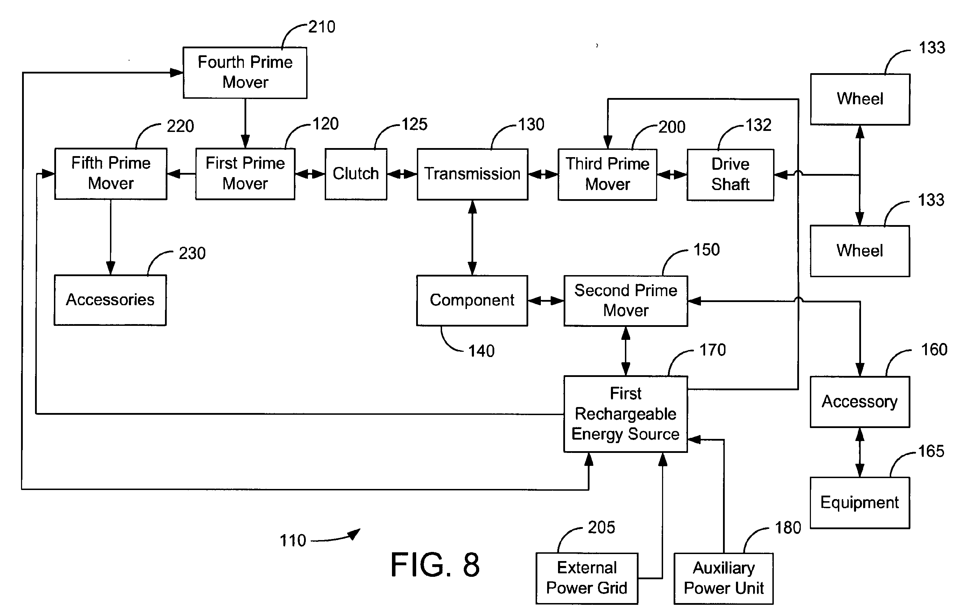

Referring now to FIGS. 8-12, a hybrid vehicle drive system 110 is shown according to another exemplary embodiment. System 110 is configured to be able to operate completely on electrical power. System 110 may operate as a parallel hybrid drive or as a series-parallel hybrid drive. System 110 is similar to system 10 and includes a first prime mover 120 (e.g., an internal combustion engine, such as a diesel fueled engine, etc.), a first prime mover driven transmission 130, a component 140 (e.g., a power take-off (PTO), a transfer case, etc.), and a second prime mover 150 (e.g., a motor, such as an electric motor/generator). Transmission 130 is mechanically coupled to component 140. According to another exemplary embodiment, component 140 may be coupled to the drive shaft of first prime mover 120. Second prime mover 150 is coupled to component 140.

If clutch 125 is not present between first prime mover 120 and transmission 130, and transmission 130 is an automatic transmission, then component 140 is preferably a "live PTO" that is coupled to the pump portion of transmission 130 and to the crank shaft of first prime mover 120.

System 110 also includes a first rechargeable energy source 170 (e.g., a battery, a bank of batteries, a fuel cell, a capacitive cell, or other energy storage device). Accessory 160 may be coupled to a second rechargeable energy source 190 and power on-board equipment 165, as described above for system 10.

Additionally, system 110 includes a third prime mover 200 with a thru-shaft that is mechanically coupled to transmission 130 and drive shaft 132. System 110 may further include an accessory 160 (e.g., a hydraulic pump, such as a variable volume displacement pump, etc.)that is coupled to second prime mover 150, a fourth prime mover 210 coupled to first prime mover 120 (e.g., a starter motor), and one or more fifth prime movers 220 that provide electrical power to on-board accessories 230 (e.g., a cooling fan for first prime mover 120, power steering pumps, an HVAC system, brakes, compressors, water pumps, cement mixer drums, etc.). One or more accessories 230 may also be powered by second prime mover 150.

Third prime mover 200 is provided between transmission 130 and wheels 133. Third prime mover 200 is configured to provide a majority of the power to wheels 133 during steady driving conditions. In the embodiment shown in FIGS. 8-12, third prime mover 200 is provided between transmission 130 and drive shaft 132. However, in other exemplary embodiments, a separate third prime mover 200 may be provided proximate to each driven wheel 133 (i.e., coupled between drive shaft 132 and wheel 133). According to another exemplary embodiment, third prime mover 200 motor may be integrated with transmission 130 after the turbine section of transmission 130 and made to be couple directly to transmission 130 or integrated within the same housing.

If it is more cost effective to use multiple smaller motors instead of a single, larger motor providing the same amount of power, or if packaging constraints do not allow for a larger diameter motor, third prime mover 200 may comprise multiple motors that are mounted on drive shaft 132 or to a second PTO coupled to transmission 130.

Fourth prime mover 210 is coupled to first prime mover 120 (e. g., to the crankshaft of an internal combustion engine, such as a diesel fueled engine, etc.). Fourth prime mover 210 may further be used to assist in cranking first prime mover 120. Cranking first prime mover 120 may be particularly advantageous when first prime mover 120 is started and stopped frequently (e.g., to reduce idle time, to engage only when accelerating, when component 140 is not coupled directly to crank shaft or pump portion of an automatic transmission, etc.). Fourth prime mover 240 may further be a relatively powerful starter motor.

Fifth prime mover 220 is configured to power an on-board accessory. Such accessories may have a wide variety of power needs and therefore multiple fifth prime movers 220 of various sizes and power capacities may be provided, depending on the needs of the vehicle.

First rechargeable energy source 170 provides power for the operation of second prime mover 150, third prime mover 200, fourth prime mover 210, and fifth prime movers 220. First rechargeable (e.g., pressurized or rechargeable) energy source 170 may include other auxiliary components (e.g., an inverter provided for an AC motor, a DC-to-DC converter to charge a DC system, an inverter for power exportation to a power grid or other equipment, controllers for motors, a charger, etc). First rechargeable energy source 170 may be charged by a variety of means including prime movers 150 or 210, an Auxiliary Power Unit (APU) 180 (e.g., an internal combustion engine, possibly fueled by an alternative low emission fuel (e.g., bio-mass, natural gas, hydrogen, or some other fuel with low emissions and low carbon output), a generator, a fuel cell, etc.), or an external power grid 205.

As shown in FIG. 9, in one mode of operation, during steady driving (such as highway driving), first prime mover 120 can be turned off, reducing fuel usage and emissions. Instead, third prime mover 200 drives wheels 133. When first prime mover 120 is turned off, transmission 130 is in neutral or disconnected via a clutch mechanism (not shown) provided between transmission 130 and third prime mover 200. By removing transmission 130 from the drive train, frictional and rotational inertia losses from transmission 130 are eliminated, thereby increasing the efficiency of third prime mover 200 and the amount of power stored in rechargeable energy source 170 that can be delivered directly to wheels 133. According to other exemplary embodiments, fifth prime mover 220 may be absent and first prime mover 120 may be operated in a low power idling mode when the vehicle is being driven to power on-board accessories and sub-systems. Steady driving can occur using an electric only mode, electric/hydraulic only mode, or hydraulic only mode. Accessories may be operated such as power steering, and driving systems and can be powered by mover 220 or other movers.

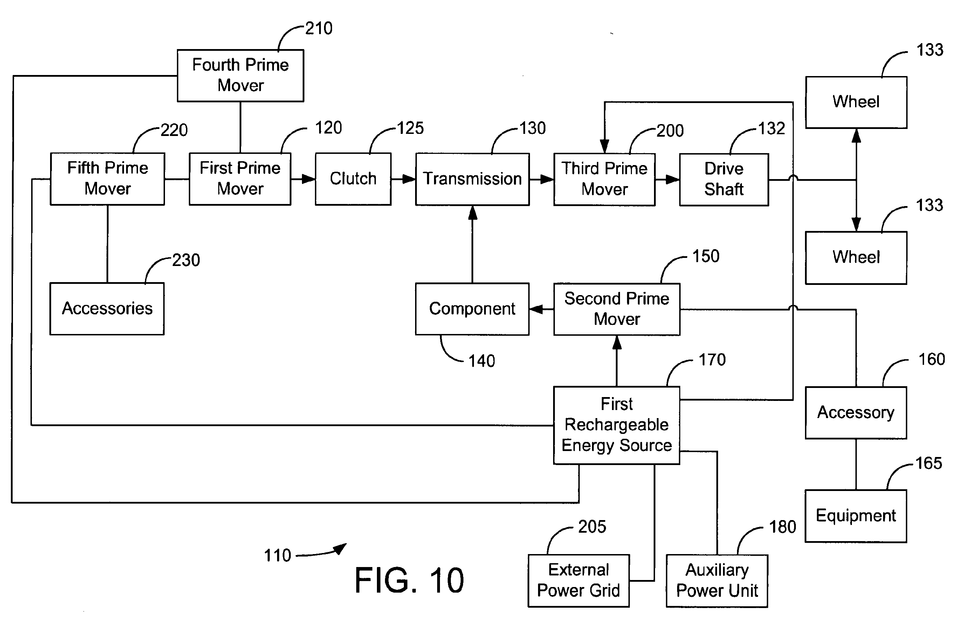

As shown in FIG. 10, if more power is required by wheels 133 than can be provided by third prime mover 200 (e.g., while driving uphill, while accelerating, etc.) first prime mover 120 may be activated. First prime mover 120 is then activated and coupled to drive shaft 132 by shifting transmission 130 into gear and/or engaging an intermediate clutch mechanism. Fourth prime mover 210 may be engaged to assist with the cranking of first prime mover 120 to further reduce fuel usage. If even more additional driving power is required by wheels 133, power may be provided to transmission 130 by second prime mover 150 through component 140 and even by fourth prime mover 210 to the crankshaft of first prime mover 120. If component 140 has a maximum power that limits the amount of power that can be transferred to and from transmission 130, one or more additional components may be added to increase the available power to and from the transmission (e.g., two PTOs, with an electric motor coupled to each PTO).

The additional power that is needed by wheels 133 provided by first prime mover 120 through transmission 130 might be less than the power provided by first prime mover 120 in its optimal operation range (e.g., optimal rpm, power output, least amount of transient power production). Therefore first prime mover 120 may be operated in its optimal operation range, with excess power being diverted through component 140 to second prime mover 150, which can then act as a generator to recharge first rechargeable energy source 150. The flexibility to operate in a blended mode in which both third prime mover 200 and first prime mover 120 provide power, while second prime mover 150 optionally generates power, is intended to allow first prime mover 120 to operate as efficiently as possible.

System 110 may also be used with first prime mover 120 being the primary power source for driving wheels 133. Third prime mover 200 may then be used as to provide auxiliary power to support first prime mover 120 during uphill driving, acceleration, or at other times. For instance, third prime mover 200 may be activated to provide additional power to drive shaft 132 between shifts of transmission 130. Third prime mover 200 therefore can be configured to provide smoother acceleration of system 110.

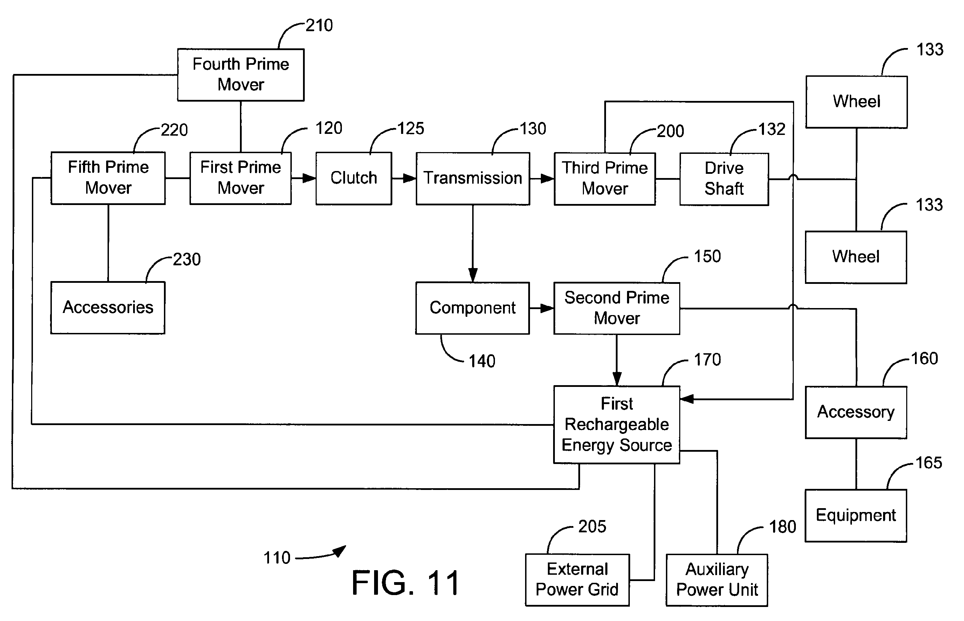

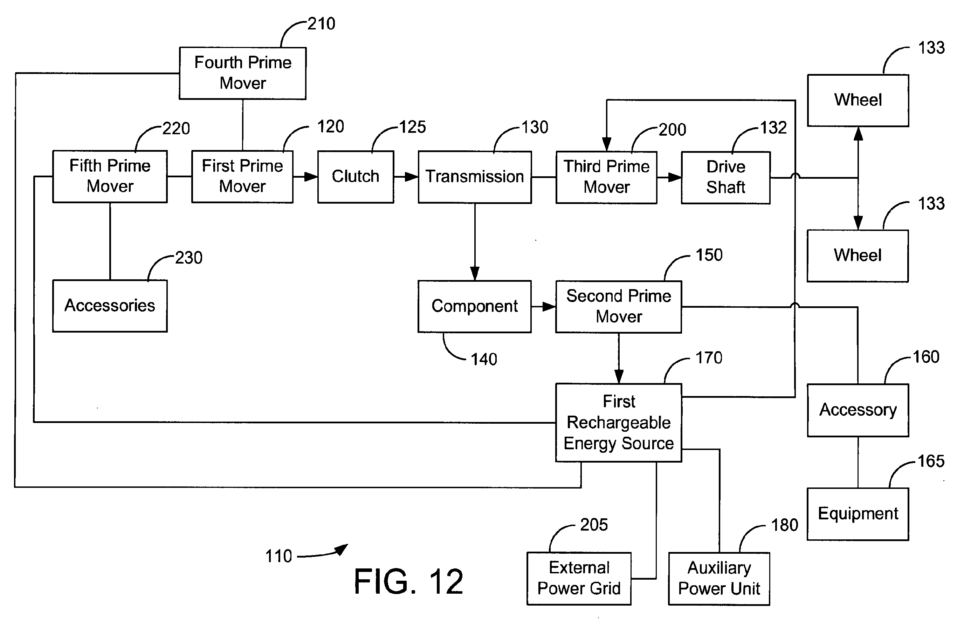

As shown in FIG. 11-12, if first rechargeable energy source 170 is depleted, in another mode of operation, first prime mover 120 may be activated and run at an efficient level (e.g., rpm, power, etc.) to operate second prime mover 150 as a generator to recharge energy source 170. First rechargeable energy source 170 may be recharged while the vehicle is stationary with third prime mover 200 also being operated as a generator (FIG. 11) or while the vehicle is moving with third prime mover 200 continuing to drive wheels 133 through drive shaft 132 (FIG. 12). In this way, system 110 may operate as a series-parallel hybrid drive.

In a different embodiment, system 110 may operate as a parallel system only. In such a system third prime mover 200 provides launch assist (e.g., provides additional power to drive shaft 132 such as with larger amounts of power provided in between shifts of transmission 130). Third prime mover 200 can also operate as a generator to store energy in first rechargeable energy source 170 during braking. A control system monitors inputs such as brake and accelerator. During braking, the control system may disengage first prime mover 120 (e.g., through clutch 125, by allowing the torque converter to slip if transmission 130 is an automatic transmission, or through another means)to make the regenerative braking more effective. The parallel system may also allow the vehicle to be propelled primarily through third prime mover 200, or, if additional power is needed, through both first prime mover 120 and third prime mover 200 (without necessarily recharging first rechargeable energy source 170 as described in a series system). If there is no recharging, then system 110 can operate first rechargeable energy source 170 in a charge depleting mode. During stationary operations second prime mover 150 may power equipment 165 or recharge first rechargeable energy source 170 as described previously. System 110 may be configured so that two separate inverters are used to drive second prime mover 150 and third prime mover 200. In such a configuration, there may be a high voltage junction box and a switch causing one of the invertors to be used to export power during stationary operations, this type of configuration potentially eliminates a separate inverter for stationary power export. In one embodiment, prime mover 200 can generate electricity if a clutch is between shaft 132 and mover 200. Alternatively, mover 150 can generate electric power if a clutch is not present between shaft 132 and mover 200 when the vehicle is stationary.

Alternately, system 110 may be configured so that second prime mover 150 only operates during stationary operations (e.g., is not configured to provide power to transmission 130 to assist in propulsion). In such a system, only one inverter may be needed. In such a system, one inverter may be used to power third prime mover 200 when the vehicle is driven (with second prime mover 150 and component 140 (PTO or similar interface) disengaged. When the vehicle is stationary, a switch or some other means to direct electrical energy from one device to another may be used to direct power from the inverter to second prime mover 150. Second prime mover 150 can then be used when the vehicle is stationary to power accessories, recharge an optional second rechargeable energy source (not shown), or to recharge first rechargeable energy source 170. Second prime mover 150 may be used with a through shaft as shown in the diagram and be coupled to accessory 160 (e.g., a pump or other accessory) or the relative positions of second prime mover 150 and accessory 160 may be reversed, with an accessory 160 having a through shaft being coupled to component 140 and second prime mover 150 being an end mount electric motor.

According to one exemplary embodiment, system 110 is used on a vehicle that makes frequent stops and performs stationary operations, such as a refuse truck. This configuration (without series operation during driving) require minimal modification to existing power train control systems, improve fuel economy during stop and go driving due third prime mover 200 on drive shaft 132 and offer superior job-site stationary operational economy.

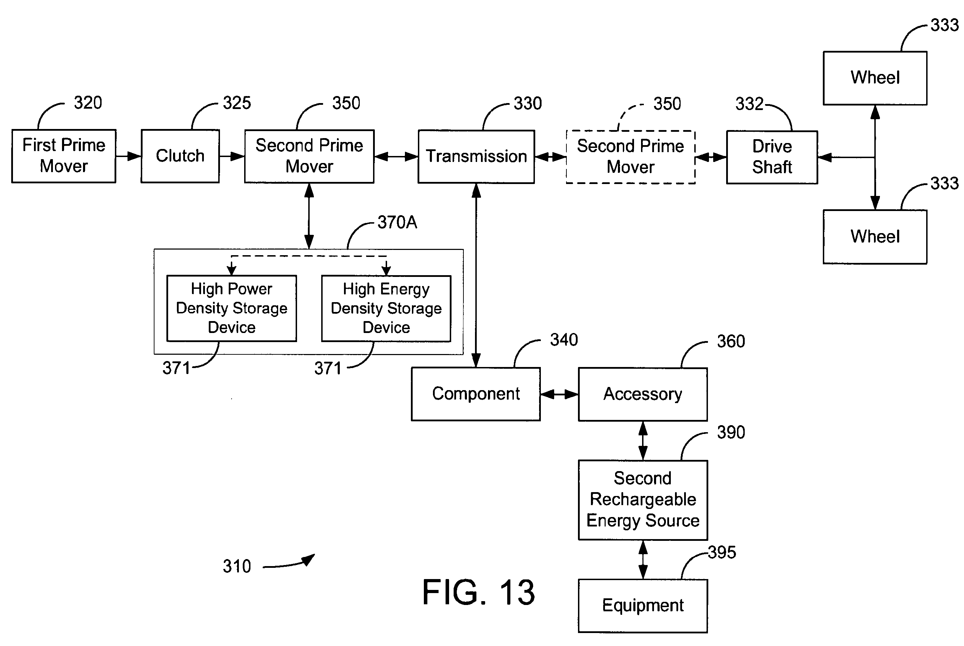

Referring now to FIG. 13, a hybrid vehicle drive system 310 is shown according to yet another exemplary embodiment. System 110 is similar to system 10 and includes a first prime mover 320 (e.g., an internal combustion engine, such as a diesel fueled engine, etc.), a transmission 330, a component 340 (e.g., a power take-off (PTO), a transfer case, etc.), a second prime mover 350 (e.g., a motor, such as an electric motor/generator), and an accessory 360 (e.g., a fluid motor such as a hydraulic pump/motor, or an air compressor/motor, etc.). Mover 350 can be a hydraulic variable displacement pump/motor. Component 340 can be turbine driven or a live PTO type such as those manufactured by Allison Transmission Inc. However, in system 310, second prime mover 350 is mechanically coupled to transmission 330. Transmission 330 is mechanically coupled to component 340, and component 340 is coupled to accessory 360. Transmission 330 is preferably an automatic (torque converter-based) or autoshift (clutch pack-based) transmission. System 310 also includes a first rechargeable energy source 370 (e.g., a battery, a bank of batteries, a fuel cell, a capacitive cell, or other energy storage device). Accessory 360 is coupled to a second rechargeable energy source 390 and power on-board equipment 395, as described above for system 10.

In an alternative embodiment, mover 350 can be disposed between transmission 330 and drive shaft 332.

System 310 is able to operate in an all-electric mode by turning off first prime mover 320 and driving wheels 333 with second prime mover 350 through transmission 330 and drive shaft 332. Frictional and rotational inertia losses from first prime mover 320 can be eliminated by disconnecting first prime mover 320 from second prime mover 350 with a clutch mechanism 325 so that second prime mover 350 does not have to turn an idle first prime mover 320. First prime mover 320 may advantageously be a smaller horsepower engine to be used to drive wheels 333 only when additional power is needed beyond what may be provided by second prime mover 350. Clutch mechanism 325 is optional. In one embodiment, system 310 can spin mover 320 without combustion taking place, thereby providing power to accessories without using fuel in mover 320. Further, such an embodiment reduces reliability and wear issues associated with clutch 325.

If first rechargeable energy source 370 becomes depleted, it may be recharged by turning on first prime mover 320 and operating second prime mover 350 as a generator. This may be done, for example, when the vehicle is not moving, while on-board equipment 395 is being powered by accessory 360 or directly using energy stored in second rechargeable energy source 390. Source 370 can also be powered from the grid and can be used to power accessory 360.

To increase the efficiency and effectiveness of power storage and transfers, first rechargeable energy source 370 may be a source 370A that has multiple distinct sections or multiple rechargeable energy sources 371 with different characteristics. For example, a first section or energy source may comprise battery cells that have high energy density, and may have a less-than ideal power density, but would be desirable to provide power for and receive power from second prime mover 350 coupled to component 340. Meanwhile, a second section or energy source may comprise battery cells that have a high power density, and may have a less-than ideal energy density, but would receive power from regenerative braking and be desirable to provide power for launch propulsion and where high power is needed for relatively short durations. Such a configuration could be used in other embodiments. Source 370 can includes a capacitor bank, an ultra capacitor source, or a small high power density battery as one source 371 and a larger high energy density lithium battery as the other source 371.

First rechargeable energy source 370 may be modular, such that one battery system residing with the vehicle is supplemented by additional modules which recharge the main battery system. Such a system may allow for plug-in hybrid operation with the addition of a charger and extra battery storage capacity. Additional rechargeable energy sources (e.g., battery modules, battery systems, etc.) may be added later in the manufacturing process, or retro-fit on a completed vehicle to increase capacity of the system and to allow system 10 to operate for longer periods with first prime mover 320 off.

Second rechargeable energy source 390 is coupled to accessory 360 and provides stored power for accessory 360. Accessory 360 stores energy in second rechargeable energy source 390 during the operation of system 310 (e.g., during cruising, regenerative braking, stationary operation, etc.). Accessory 360 may draw energy from second rechargeable energy source 390 to provide bursts of high horsepower to transmission 330 through component 340 until second rechargeable energy source 90 is exhausted or may operate only in stationary mode, providing power to equipment for intermittent high power operations or to limit the need to operate component 340. In another embodiment, accessory 360 may directly power equipment and second rechargeable energy source 390 may be absent.

According to one exemplary embodiment, accessory 360 is a hydraulic pump and second renewable energy source 390 is a hydraulic system with a high pressure portion (e.g., an accumulator) and a low pressure component (e.g., a reservoir tank). According to another exemplary embodiment, accessory 360 may be a compressor and second renewable energy source 390 may be a compressed gas storage tank. Second rechargeable energy source 390 may be used only at the job site. Using second rechargeable energy source 390 only at the job site may reduce the amount of time second prime mover 350 is used or allow for intermittent higher horsepower operation of equipment 395. A fluid coupling may also be used to connect component 340 to accessory 360.

Power demands for accessory 360 can be driven by source 390. For example, as source 390 is discharged below a threshold or at a rate greater than a threshold rate, power can be brought from component 340. The power can ultimately be provided by mover 350 via source 370 or an external source or by mover 320. Once the source 390 is fully recharged or reaches a predetermined pressure accessory 360 can be turned off until more power is needed by source 390. A pressure switch, electronic control system using solenoid valves, or other components can be utilized to implement the control scheme.

Referring to FIG. 14, in an alternative embodiment, system 410 is similar to system 10 and includes a first prime mover 420 (e.g., an internal combustion engine, such as a diesel fueled engine, etc.), a transmission 430, a component 440 (e.g., a power take-off (PTO), a transfer case, etc.), a second prime mover 450 (e.g., a motor, such as an electric motor/generator), and an accessory 460 (e.g., a hydraulic pump, such as a variable volume displacement pump, etc.). Second prime mover 450 is mechanically coupled to component 440. System 410 also includes a first rechargeable energy source 370 (e.g., a battery, a bank of batteries, a fuel cell, a capacitive cell, or other energy storage device). System 410 further includes both a first component 440 such as a PTO, and a second component 510 such as a transfer case coupled to transmission 430.

The use of two prime movers 450 and 590 coupled to two components 440 and 580 can be beneficial for heavier vehicles where more power is needed and if high accessory power loads cause the sum of accessory 465 and second prime mover 450 to exceed the rated power of component 440. In such situations, the additional component 580 and prime mover 590 can assist in charging rechargeable energy source 470. Even if the sum of required power by second prime mover 450 and accessory 465 is not a problem in simultaneously recharging and powering equipment, using both prime movers 450 and 590 can increase the efficiency of system 410 by allowing first prime mover 420 to operate for a shorter period when recharging during stationary operations.

Energy from regenerative braking bypasses transmission 430, passing through component 510 to operate accessory 460. Similarly, motive power for drive shaft 432 from accessory 460 bypasses transmission 430, passing through component. Component 510 further allows power from accessory 460 to be transferred to drive shaft 432, assisting, for example, when the vehicle is accelerating. Transmission 430 is further mechanically coupled to component 440. Component 440 is coupled to second prime mover 450. Using both a PTO and a transfer case allows system 410 to benefit from better regenerative braking from drive shaft and the inclusion of a PTO to power electric motor operated hydraulic equipment. Second prime mover 450 may provide power to a second accessory 465 to pressurize second rechargeable energy source 490 when the vehicle is parked or moving at a constant speed. Second rechargeable energy source 490 provides additional power during the acceleration of the vehicle. System 410 may optionally include a clutch between first prime mover 420 and transmission 430 and/or between transmission 430 and component 510.

System 10 may further include a third component 580 such as a PTO, a third prime mover 590, and a fourth prime mover 595. Third prime mover 590 is coupled to third component 580. Third prime mover 590 is coupled to first rechargeable energy source 470 and is configured to charge first rechargeable energy source 470. In this way, second prime mover 450 may draw power from first rechargeable energy source 470 while first rechargeable energy source 470 continues to be charged by third prime mover 590. Fourth prime mover 595 may be a larger starter motor and may be provided for first prime mover 420 to assist with low speed torque and quick starts of first prime mover 420. The large starter motor can also reduce unnecessary idle. First prime mover 420 may be started and stopped to reduce unnecessary idling. Mover 595, mover 590, and component 580 are optional. Clutches can be placed between mover 420 and transmission 430 and between transmission 430 and component 510. The interface between mover 450 and accessory 465 can be by a one way or two way interface.

Components 580 and 440 may interface with different sections of transmission. For example, one component may interface with the input section of transmission 430 that is coupled to first prime mover 420 while another component interfaces with the output section of transmission 430 that is coupled to the drive shaft 432. Transmission 430 maybe configured so that each section can operate independently, or could operate at different speeds with minimal interaction under some operating modes.

According to other exemplary embodiments, packaging constraints in the vehicle may prevent fourth prime mover 595 from being a very large starter/generator in close proximity to first prime mover 420. In such situations, the available power to the hybrid drive system 410 may be increased by providing power directly to transmission 430 with second prime mover 450 through first component 440, allowing fourth prime mover 595 to be a smaller starter/generator (e.g., an integrated starter motor/generator). In one embodiment, the turbine section of transmission 430 can receive power from second prime mover 450. Fourth prime mover 595 provides power to first prime mover 420 for starting (initiating operation of the engine) or for operating first prime mover 420 when first prime mover 420 is off (i.e., to drive attached accessories such as power steering pump, braking or other accessories). Fourth prime mover 595 can be used to crank first prime mover 420 while simultaneously continuing to use first component 440 and second prime mover 450 to power additional loads.

If transmission 430 is an automatic transmission in which first component 440 interfaces with the turbine section of the transmission, first component 440 (e.g., a PTO) can offer an increased transfer of energy to the hybrid system 410 in comparison to a transmission in which the PTO interfaces with the drive shaft of the prime mover or the pump portion of a torque converter section of the transmission. This is due to the more direct connection of energy through transmission 430 from wheels 433 to second prime mover 450. The energy does not have to be transferred through a torque converter to the crank shaft of first prime mover 420.

Connecting second prime mover 450 to first component 440 for applications in which first component interfaces with the turbine section may not allow the turbine section of transmission 430 to efficiently effect motion of first prime mover 420 unless the torque converter is locked. However, the combination of a smaller starter/generator (i.e., fourth prime mover 595) and the additional prime mover connected to the first component 440 (i.e., second prime mover 450) ensures that second prime mover 450 can directly effect motion to the turbine section of transmission 430, resulting in improved regenerative braking and the ability to operate second prime mover 450 at a varied speed, while holding the speed of the fourth prime mover 595 relatively constant to operate accessories connected to first prime mover 420, such as a power steering pump. Fourth prime mover 595 can therefore efficiently transfer energy to first prime mover 420 and second prime mover 450 can efficiently transfer energy to transmission 430 and recover energy through regenerative braking. When large amounts of power must be exported (i.e., to power hydraulic or electric accessories) first prime mover 420 can be cranked using both fourth prime mover 595 and second prime mover 450 through first component 440 and transmission 430. Likewise, fourth prime mover 595 can provide additional power to first rechargeable energy source 470 to augment the energy stored from second prime mover 450.

If greater exportable power or hybrid launch assist is required, an additional PTO-mounted electric motor (i.e., third prime mover 590) can be installed. This also provide redundancy for exportable power, at a lower level of overall power output. Exportable power may be provided, for example, for a trailer that would normally have its own heat engine prime mover, such as a chipper, or a cable puller.

To allow for better acceleration without having to accelerate first prime mover 420, second prime mover 450 can operate independently of fourth prime mover 595. To create "slip" and allow the pump section of the torque converter (e.g., in an automatic transmission) to operate at a different rpm compared to the turbine section, pressure of the fluid in the torque converter of transmission 430 can be reduced using a by-pass, valve, or some other means. If fourth prime mover 595 fails, first prime mover 420 may be cranked by locking the torque converter using a clutch and providing power from second prime mover 450 through transmission 430. For a manual transmission or an autoshift transmission (e.g., mechanical based or clutch based transmission), fourth prime mover 595 can operate independently of second prime mover 450. Second prime mover 450 can operate the transmission independently and fourth prime mover 595 can operate accessories (e.g., pumps, HVAC, and any loads mechanically coupled to first prime mover 420) through first prime mover 420. The independent operation is enabled because the clutch can disengage first prime mover 420 from transmission 430.

System 410 can use fourth prime mover 595, second prime mover 450, and/or third prime mover 590 to effect motion of the vehicle by powering transmission 430. One or more of the prime movers 450, 590, and 595 can also be used to power first prime mover 420 in order to assist in starting first prime mover 420 or to power accessories such as steering pump, braking systems, or other systems powered by first prime mover 420. First prime mover 420 may be powered without first prime mover 420 being on (no combustion) allowing for quieter operation of the vehicle.

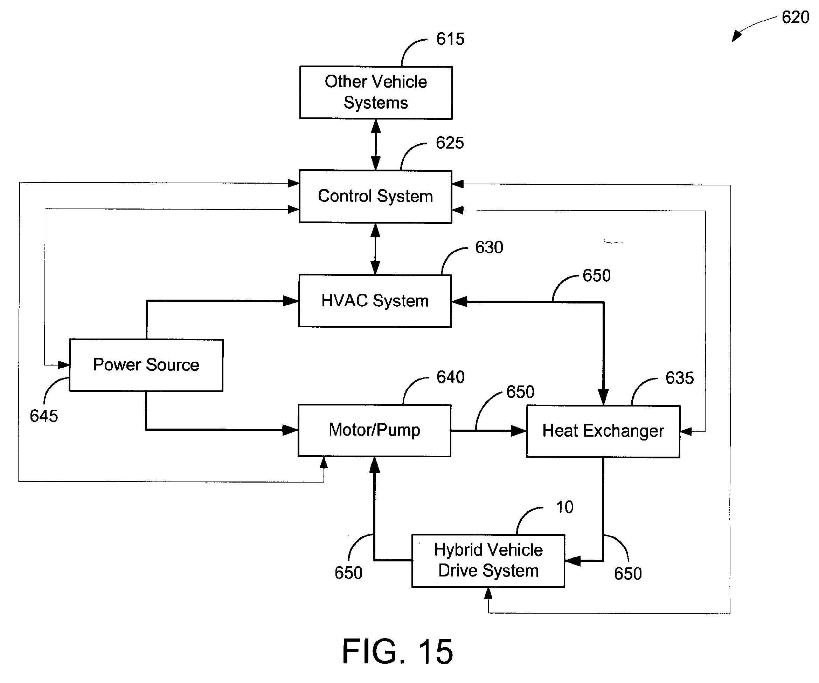

Referring to FIG. 15, in an exemplary embodiment, components in hybrid vehicle drive system 10 (e.g. electric motor, inverter, rechargeable energy source, an internal combustion engine block, etc.) may be heated and cooled by a thermal management system 620 to ensure they are at the proper temperature for optimal performance in cold and warm environments. While FIG. 15 shows a thermal management system being used for system 10, such a thermal management system may be used with any vehicle drive system described herein. A control system 625 may be utilized to monitor the temperature of this equipment and will determine whether it is necessary to start/stop cooling or heating by the thermal management system 620. The control system 625 may also control and/or monitor individual components or other vehicle systems 615 (e.g., other cooling systems, drive systems, power systems, etc.).

The thermal management system 620 may use an auxiliary HVAC (heating, ventilation and air conditioning) system 630 to supply cold refrigerant using fluid channel 650 through a heat exchanger 635 to cool fluid (e.g. oil, transmission fluid, coolant fluid, ethylene glycol, etc.) circulated by a motor/pump 640 using fluid channel 650 to cool first rechargeable energy source 70 and/or other components in hybrid vehicle drive system 10. Motor/pump 640 can be a distinct pump or be any of the movers described in any of the hybrid drive systems. For example, the pump can be driven or be second prime mover 50 or any other movers described in the present application. Advantageously, an additional pump is not required for system 620. Warm refrigerant is returned back to HVAC system 630 to repeat the cycle. Motor/pump 640 and HVAC system 630 may be powered by a power source 645 (e.g. rechargeable energy source, external power grid 105, etc.). Additionally, this system may use HVAC system 630 to supply warm fluid using fluid channel 650 through heat exchanger 635 to heat fluid circulated by motor/pump 640 using fluid channel 650 to heat components in hybrid vehicle drive system 10 and/or first prime mover 20. Alternatively, HVAC system 630 could be used in addition or be replaced by existing chassis cooling systems (e.g. transmission, engine, etc.) and heat from first prime mover 20 to cool and/or heat components in hybrid vehicle drive system 10. Optionally, fluid used to cool certain hybrid components, such as fluid from the output of the inverter cooling loop maybe used for, or circulated to, other components, such as the vehicle radiator, or heat exchanger to warm engine block or engine oil or to warm hydraulic oil, or to warm battery system in cold weather, among other applications. A solenoid valve or other means of directing fluid may be used to selectively warm components, depending upon the temperature of components.

According to another exemplary embodiment, a pump may be used to circulate the transmission fluid from transmission 30 through component 40 to cool an electric motor (i.e., second prime mover 50) and/or a hydraulic pump/motor (i.e., accessory 60). Second prime mover 50 is thermally maintained by the use of the existing transmission cooling system integrated with the chassis transmission 30. Using the existing transmission cooling system eliminates the cost of an additional cooling loop. As component 40 normally has transmission fluid in the PTO cavity from transmission 30, the fluid can easily be pumped to second prime mover 50 to provide additional cooling and circulated back to transmission 30. The power to circulate transmission fluid to second prime mover 50 and operate the cooling system while the chassis is not being driven may be provided by an internal electric pump. According to an exemplary embodiment, component 40 could have an integrated pump. In such an embodiment, the transmission fluid pump is actuated by movement of second prime mover 50. The transmission fluid pump is moved by component 40 if second prime mover 50 is rotated by component 40. A second transmission fluid pump may be provided on second prime mover 50 and may be activated to increase the flow of transmission fluid through component 40 and second prime mover 50. Such increased flow may be advantageous when second prime mover 50 is driven by component 40 during generation (when second prime mover 50 acts as a generator). In such cases, second prime mover 50 may create additional heat which must be removed. U.S. Patent Nos. 7,471,066, 7,427,156, and 7,323,272 are incorporated herein by reference.

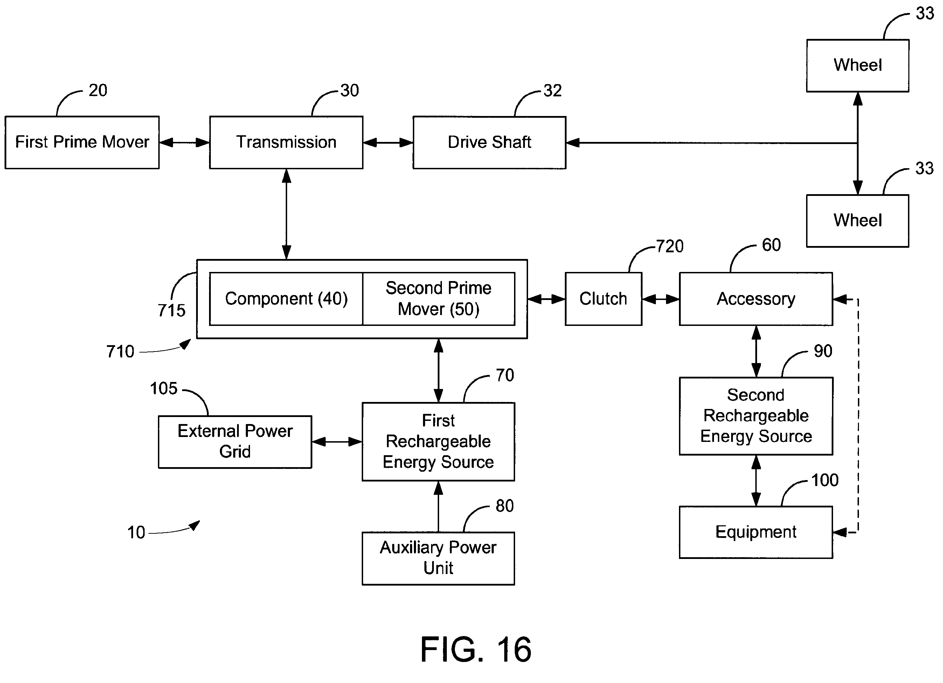

Referring now to FIG. 16, to facilitate the transfer of the transmission fluid, a second prime mover 50 and a component 40 (i.e., a PTO) may be provided as single modular unit 710. The modular design provides an easy installation by bolting the assembly to the PTO opening in transmission 30. Second prime mover 50 can be powered electrically or hydraulically depending on the application. According to one exemplary embodiment, second prime mover 50 and component 40 are coupled together and housed in one enclosure 715. Such a modular unit 710 can be installed on transmission 30 similar to the manner a PTO is mounted and has an output from the second prime mover 50 portion similar to a PTO (e.g. rotating shaft). Modular unit 710 may have an integrated clutch between transmission 30 and second prime mover 50, allowing second prime mover 50 to be selectively engaged or disengaged from transmission 30, even if the transmission PTO gear is operating.

Modular unit 710 comprises connectors that allow power and control signals to be sent to the PTO portion 40 and the prime mover portion 50. Modular unit 710 may be configured such that a PTO of a certain size (i.e. torque and horsepower rating) is matched to a motor of appropriate torque and horse power. Second prime mover 50 may be relatively long and have a relatively small diameter. Such proportions allow modular unit 710 to be mounted beside transmission 30 without interference or the need for a long extension shaft to join second prime mover 50 to component 40.

According to one exemplary embodiment, modular unit 710 provides power bidirectionally through transmission 30. The power is transferred in one direction through transmission 30 and driveshaft 32 to power wheels 33 and in the other direction to capture braking energy to provide power to the first rechargeable energy source 70. According to another exemplary embodiment, modular unit 710 is used in a single direction application to recharge first rechargeable energy source 70 while providing power to accessory 60. According to still another exemplary embodiment, modular unit 710 is used in an idle reduction system, in which the modular unit 310 does not direct power back into transmission 30 but only receives power from transmission 30 to provide power for an accessory 60.

Accessory 60 (e.g., a hydraulic motor/pump, an air compressor, etc.) is coupled to the end of modular unit 710. An optional additional clutch 720 may be provided between modular unit 710 and accessory 60 to selectively disengage accessory 60. If a variable volume displacement pump is used, clutch 720 may not be required, since such a pump can operate with low or no flow and low resistance.

According to another exemplary embodiment, instead of being provided as a single modular unit in the same enclosure, component 40 and second prime mover 50 may be in separate housings and mechanically coupled. The cooling fluid (e.g., transmission fluid, hydraulic fluid, etc.) may be transferred between devices through hoses, or each housing may have its own individual fluid connection that is not connected between devices. This may be advantageous if different cooling fluids are used for each device. As an example, component 40 may use fluid from a transmission, while second prime mover 50 may use fluid from a transmission, or a different source, such as a separate water cooling system (such as a vehicle engine coolant, or separate hybrid cooling circuit) or a hydraulic system. Alternatively, air cooling can be utilized for mover 50.

According to still other exemplary embodiments, corresponding fluid channels may be integrally formed in the housings of component 40 and second prime mover 50. When component 40 and second prime mover 50 are coupled together, the fluid channels are aligned, allowing fluid to pass between the devices. One or both of the devices include a seal proximate to the fluid channels on the mating surface to reduce the likelihood of fluid leaking. The fluid is circulated through component 40 to second prime mover 50 and back through component 40 to transmission 30. A separate or an additional cooler (i.e. radiator) could optionally be used if the fluid required additional cooling to prevent it from becoming too hot.

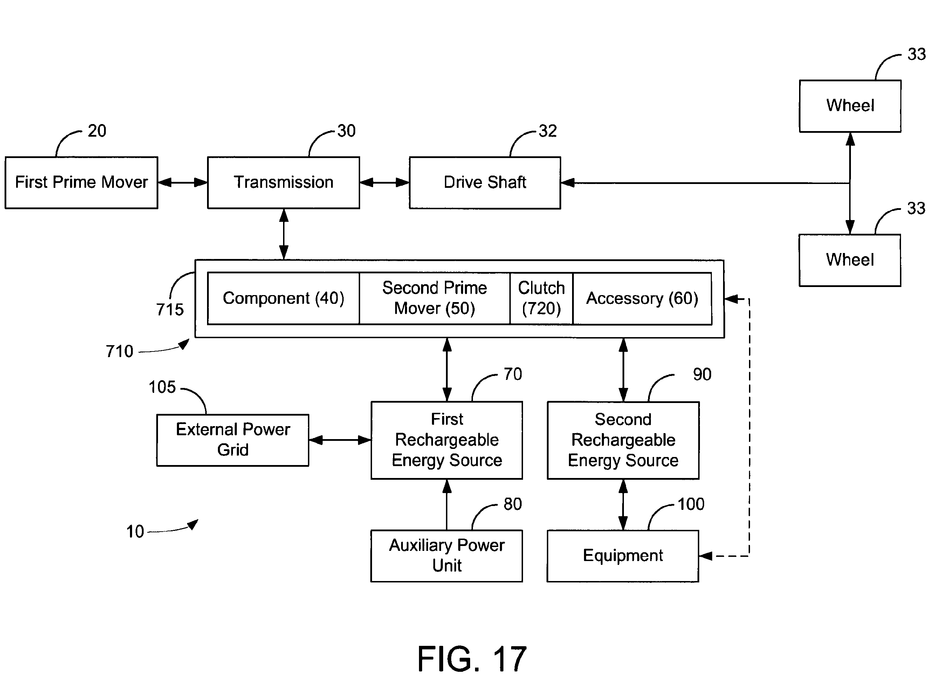

Referring now to FIG. 17, according to another exemplary embodiment, modular unit 710 may further include an accessory 60 that is housed within enclosure 715 along with component 40 and second prime mover 50. In such a unit 710, hydraulic fluid (e.g. from equipment circuit) or fluid from transmission 30 can be used to optionally cool second prime mover 50, especially if it is an electric motor. Component 40 may be, for example, a hydraulic pump or an air compressor. Clutches may be provided between any of the sections of modular unit 710.

According to still another exemplary embodiment, component 40 may be eliminated and second prime mover 50 and/or accessory 60 may be integrated into the housing of transmission 130. One or more electric motors may be coupled to the crank shaft or to the pump section of an automatic transmission 30 and while one or more other electric motors are coupled to the drive shaft after the output of the transmission gears or to the turbine section of transmission 30.

According to another exemplary embodiment, an electric motor (i.e., second prime mover 50) may be cooled by hydraulic fluid provided by the hydraulic system instead of by transmission fluid. Accessory 60 (i.e., a hydraulic pump) or a separate small pump circulates hydraulic fluid through the electric motor. The circulating pump is configured to operate when the electric motor operates.

If there is not sufficient room for modular unit 715 due to space constraints (e.g., interference with transmission 30 or other components or frame members of the vehicle), an adapter gear assembly may be used. The adapter gear unit is coupled between modular unit 715 and transmission 30 to move hybrid unit 715 out to allow clearance. Such an adapter gear assembly may also be used in other exemplary embodiments, where an accessory or a prime mover is bolted directly to PTO. Unit 715 can receive fluid from transmission 30 for cooling mover 50 or other components.

While the hybrid vehicle drive system 10 of FIGS. 16 and 17 are described as being arranged with an electric motor as second prime mover 50 coupled to a PTO and a hydraulic pump/motor as an accessory 50 coupled, in turn, to second prime mover 50, other arrangements are possible. The same means of providing a fluid to remove heat from an electric motor could be used if the PTO is coupled to the hydraulic pump and then the electric motor is coupled to the hydraulic pump. Transmission fluid or hydraulic fluid may also be routed to other prime movers in hybrid vehicle drive system 10 to provide cooling. Alternatively, unit 715 can be air cooled.

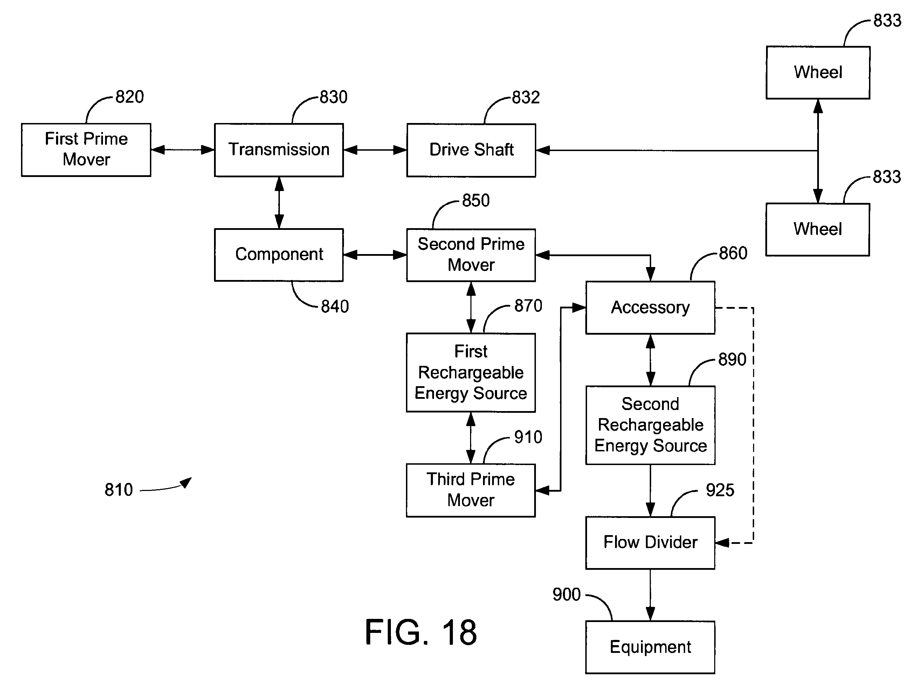

Referring now to FIG. 18, a hybrid vehicle system 810 is shown according to another exemplary embodiment. Similar to system 10, system 810 includes a first prime mover 820 (e.g., an internal combustion engine, such as a diesel fueled engine, etc.), a first prime mover driven transmission 830, a component 840 (e.g., a power take-off (PTO), a transfer case, etc.), a second prime mover 850 (e.g., a motor, such as an electric motor/generator, a hydraulic pump with a thru-shaft, etc.), and an accessory 860 (e.g., a hydraulic pump, such as a variable volume displacement pump, etc.). Transmission 830 is mechanically coupled to component 840. Component 840 is coupled to second prime mover 850. Second prime mover 850 is coupled to accessory 860.

Hybrid vehicle system 810 may be used for a vehicle such as a cable-laying vehicle that is driven for extended periods at slow speeds. The hybrid vehicle system 810 may also be used in other applications where simultaneous operation of hydraulic equipment 900 and the crankshaft of first prime mover 820 is needed. Using power stored in first rechargeable energy source 870, second prime mover 850 may drive the crankshaft of first prime mover 820 (e.g., an Allison 3500 internal combustion engine). By turning the crankshaft, wheels 833 can be driven through drive shaft 832 and any accessories driven by first prime mover 820 (e.g., power steering pump, HVAC systems, etc.) can be operated without consuming fuel and producing emissions. Because second prime mover 850 may operate at a variable speed when producing motive power for the vehicle, a third prime mover 910 drawing power from first rechargeable energy source 870 can provide constant RPM to power an accessory 860 such as a hydraulic pump to operate hydraulic equipment 900 such as cable-laying equipment. In another embodiment, only second prime mover 850, component 840 (PTO) and first rechargeable energy source 870 may be present. When the PTO is engaged with the crank shaft of the prime mover, such as in an Allison 3000 or 4000 series transmission, it may be possible to provide motive force solely through the PTO, while simultaneously driving other systems that are connected to the prime mover (with prime mover 820 off, but mechanically coupled to the other systems). An additional PTO may be added with a third prime mover acting in the same way to provide additional power to transmission 830.

According to another exemplary embodiment, accessory 860 may be driven at variable speeds by second prime mover 850 and a flow divider 925 may be coupled between accessory 860 and equipment 900. Flow divider 925 allows accessory 860 to operate at variable speeds second prime mover 850 and still provide constant gallons per minute flow to equipment 900 and/or to second rechargeable energy source 890.

According to another exemplary embodiment, a flow divider 925 may be provided between hydraulic equipment 900 and a modular unit 310 including an accessory 60 and a second prime mover 50 as shown in FIG. 16.

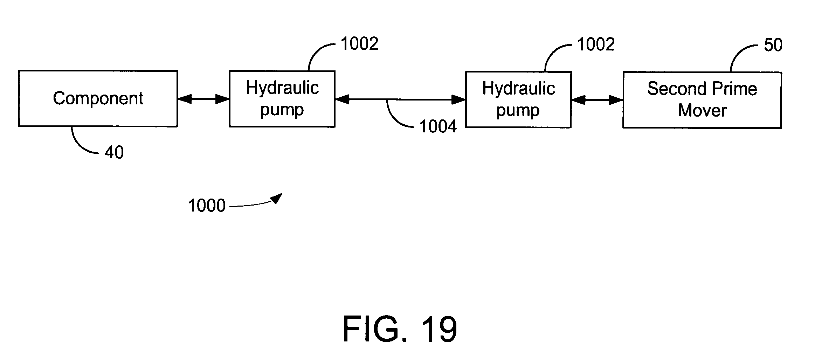

According to various exemplary embodiments, the elements of system 10 may be coupled together with fluid couplings. One exemplary embodiment of such coupling 1000 is shown in FIG. 19 coupling a component 40 to a second prime mover 50. Fluid coupling 1000 includes one or more hydraulic motors/pumps 1002 and a fluid channel 1004 that couples together the hydraulic motors/pumps 1002. While fluid couplings 1000 may increase the cost of system 10, they allow greater flexibility in the placement of the various elements of system 10 over that which would be generally possible if the elements are coupled with mechanical shafts. Fluid coupling 1000 may include low and/or high pressure reservoirs. Fluid coupling 1000 may include a wide variety of fluids include, but not limited to hydraulic oil, other liquids and air or other gases.

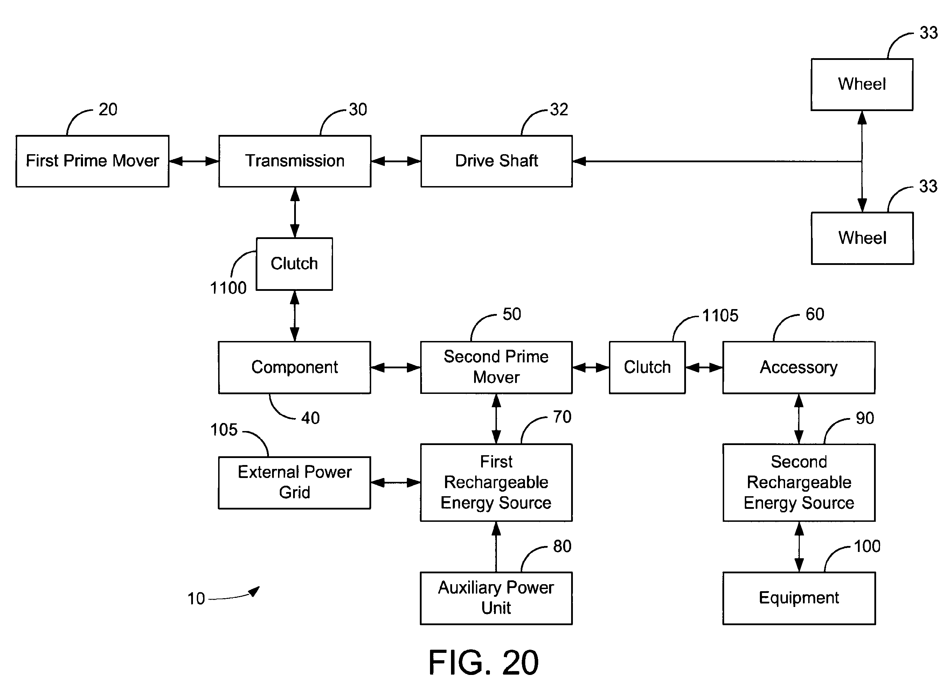

Referring to FIG. 20, according to another exemplary embodiment, a clutch 1105 may be provided between transmission 30 and component 40 and a clutch 1105 may be provided between second prime mover 50 and accessory 60. Clutches 1100 and 1105 allow second prime mover 50 to be selectively isolated from transmission 30 and accessory 60. Clutch 1100 may be imbedded or integrated into component 40. To reduce wear on clutches 1100 and 1105, the rotational speeds of the elements of the system may be matched. For example, second prime mover 50 may be first isolated by disengaging clutches 1100 and 1105. Second prime mover 50 is then activated and rotated at an optimum rotational speed for accessory 60. In one embodiment, clutch 1105 may then be engaged, coupling second prime mover 50 to accessory 60. First prime mover 20 may then be activated and turned at a rotational speed that is compatible with the rotational speed of second prime mover 50 such that the input gears of component 40 (e.g., as being driven by second prime mover 50), are rotating at the same speed as the output gears of transmission 30. In this way, the elements on either side of clutch 1100 are rotating at the same speed when clutch 1100 is engaged. Clutch 1105 may be engaged to drive accessory 60. Alternatively, a clutch may be between component 40 and second prime mover 50. The clutch may be embedded within component 40. Gears within component 40 may cause the output section connected to the clutch and the accessory to rotate at a different speed than the input (the input is connected to the PTO gear of the transmission). To reduce wear of the clutch, the speed of second prime mover 50 and first prime mover 20 are adjusted minimize any difference in speed between the output of the PTO and the second prime mover 50, before engagement of the clutch. In this way the rotational speed of the PTO output gear is very similar or the same as the second prime mover 50, so that when the clutch is engage there is very little wear. The clutch pack can be on the output side of the PTO, between the gears in the PTO and the device that is attached to the PTO. The PTO could be a hotshift PTO with a clutch. A clutch would be needed to separate second prime mover 50 from transmission 30 for stationary operations, where the engine is off, transmission 30 is also off, and second prime mover 50 must freely move. If transmission 30 has a clutch (such as in a manual or automated manual transmission), it may be possible for the internal PTO gear within the transmission to spin freely. In that case, component 40, the PTO may not require a clutch to operate in stationary mode.

The elements of system 10 may be coupled together with a variety of methods such as with extension shafts or fluid couplings. According to one exemplary embodiment, second prime mover 50 is directly coupled to component 40 using a standard bolt flange. Second prime mover 50 includes a bolt flange on the output side that is the same as a standard bolt flange generally found on PTOs. In this way, a wide variety of existing elements (e.g., compressors, hydraulic pumps, traction motors, clutch packs, etc.) that are configured to be coupled to a PTO may instead be coupled to second prime mover 50. According to some exemplary embodiments, second prime mover 50 may include an embedded output gear instead of an output shaft.

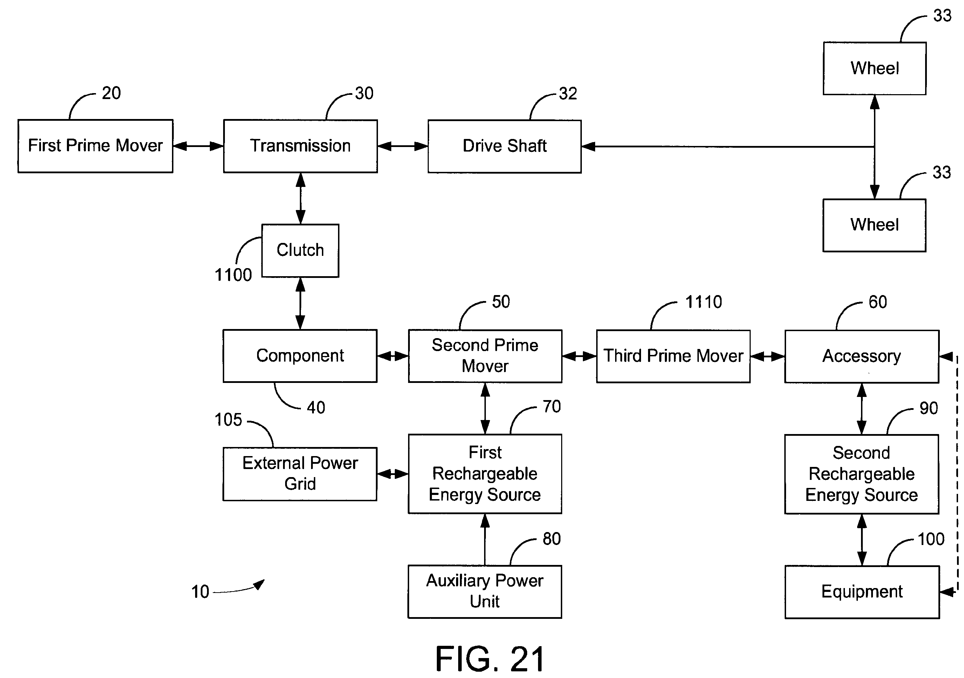

Referring now to FIG. 21, a second prime mover 50 with a sufficient power rating for the needs of system 10 may be too large a diameter to fit due to interference with transmission 30 or other frame members or components of the vehicle powered by system 10. In such cases, a second prime mover 50 with a lower capacity may be coupled to component 40. A third prime mover 1110 may then be coupled to second prime mover 50. Second prime mover 50 may be sufficient to meet the majority of the needs of system 10. When additional power is needed, third prime mover 1110 may be activated to supplement second prime mover 50. Third prime mover 1110 may be mounted behind the transmission in a location that allows for the installation of a larger diameter prime mover. A shaft or other means of coupling second and third prime mover may be used.

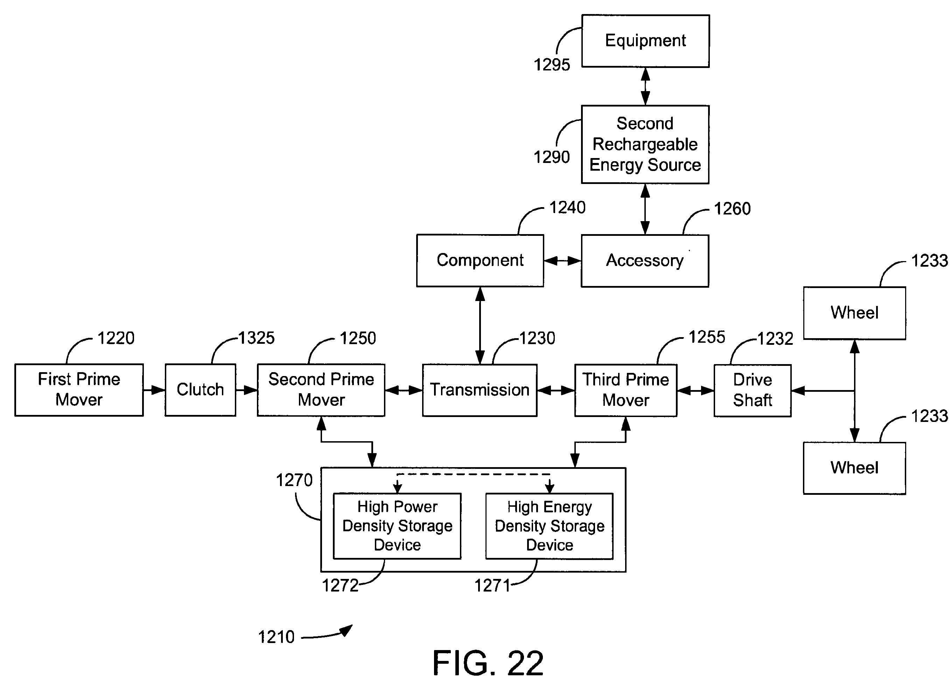

Referring now to FIG. 22, a hybrid vehicle drive system 1210 is shown according to yet another exemplary embodiment. System 1210 is similar to system 10 and includes a first prime mover 1220 (e.g., an internal combustion engine, such as a diesel fueled engine, etc.), a transmission 1230, a component 1240 (e.g., a power take-off (PTO) (e.g., turbine driven or live PTO type), a transfer case, etc.), a second prime mover 1250 (e.g., a motor, such as an electric motor/generator), and an accessory 1260 (e.g., a hydraulic pump, such as a variable volume displacement pump, etc.). However, in system 1210, second prime mover 1250 is mechanically coupled to transmission 1230. A third prime mover 1255 is optional and is coupled between transmission 1230 and drive shaft 1232. Third prime mover 1255 may be housed in the same case as the transmission, as previously described or mounted independently separate from transmission 1230. Transmission 1230 is mechanically coupled to component 1240, and component 1240 is coupled to accessory 1260. System 1210 also includes a first rechargeable energy system or source 1270 (e.g., a battery, a bank of batteries, a fuel cell, a capacitive cell, or other energy storage device). Accessory 1260 can be a fluid motor and is coupled to a second rechargeable energy source 1290 and power on-board equipment 1295, as described above for system 10. In an alternative embodiment, movers 1250 and 1255 can be disposed next to each other before or after transmission 1230.

Movers 1250 and mover 1255 can be powered from a rechargeable energy source system such as from a single source 1270 or from a system with two or more distinct sources. Source 1270 can be a single source or a number of separate sources. In one embodiment, source 1270 is comprised of a source 1272 which is electrically coupled to mover 1250 and source 1271 which is a coupled to mover 1255. Sources 1271 and 1372 can be coupled to each other. Source 1271 can be a higher power density source, and source 1272 can be a higher energy density source. A higher energy density source has the advantage of being more suitable for powering accessory 1260 for longer periods of time at the work site.

Third prime mover 1255 supplements transmission 1230 (e.g., an automatic transmission) during shifts by increasing power to drive shaft 1232 and, therefore, to wheels 1233. Third prime mover 1255 may supplement power to wheels in response to throttle controls. By placing transmission 1230 in neutral, second prime mover 1250 can act as a generator, while third prime mover 1255 propels the vehicle. The use of second prime mover 1250 and third prime mover 1255 allows first prime mover 1220 to operate in its most efficient operating region (power, rpm, etc.). This is done to increase overall efficiency of the vehicle, among other benefits (such as quieter, less emissions, etc.) Third prime mover 1255 may operate until power requirements are exceeded.

System 1210 can operate in an all electric mode by disconnecting clutch 1225 and turning off prime mover 1220. Second prime mover 1250 and/or third prime mover 1255 can be operated to provide propulsion. Second prime mover 1250 transmits power using transmission 1230 to drive shaft 1232. Third prime mover 1255 and/or second prime mover 1250 may operate until power requirements are exceeded. If third prime mover 1255 is operated alone and more power for the drive shaft 1232 is needed, a control system can shift transmission 1230 into gear after second prime mover 1250 is synchronized to reduce any differences in speed of certain internal components within transmission 1330 to result in a smooth engagement of second prime mover 1250. Second prime mover 1250 then acts as a motor to provide additional propulsion. A control system may operate second prime mover 1250 and third prime mover 1255 to achieve less interruption of power during shifting of gears, resulting in smoother acceleration or reduction in speed. When braking, second and/or third prime movers 1250 and 1255 may operate as a generator to convert energy and store it in rechargeable energy source 1270. The control system can be electronic and programmed with software to implement the functions described herein.

If additional power is needed, or one or more rechargeable energy sources have low energy storage (e.g. state of charge below a threshold), clutch 1225 is engaged after first prime mover 1220 has been started and synchronized and system 1210 then becomes a parallel hybrid system. If the vehicle is at a constant speed, second prime mover 1250 may be used very little or turned off and third prime 1255 mover may be turned off and disconnected by a clutch within transmission 1230 (or between transmission 1230 and third prime mover 1255), resulting in very little additional friction or losses. This is done to increase overall efficiency of the vehicle, among other benefits (such as reduced noise and, less emissions, etc.)

During stationary operations at the job-site, second prime mover 1250 can be operated to power component 1240 (e.g., to provide power to equipment 1295). In one embodiment, mover 1250 can provide ordinary hybrid driving power and mover 1255 can be engaged to provide power at the work site or to provide power for greater propulsion. According to one all electric propulsion embodiment, mover 1250 is designed for propulsion during for normal speeds and additional power is provided by mover 1255 when needed. In an alternative embodiment, clutch 1225 can be eliminated.

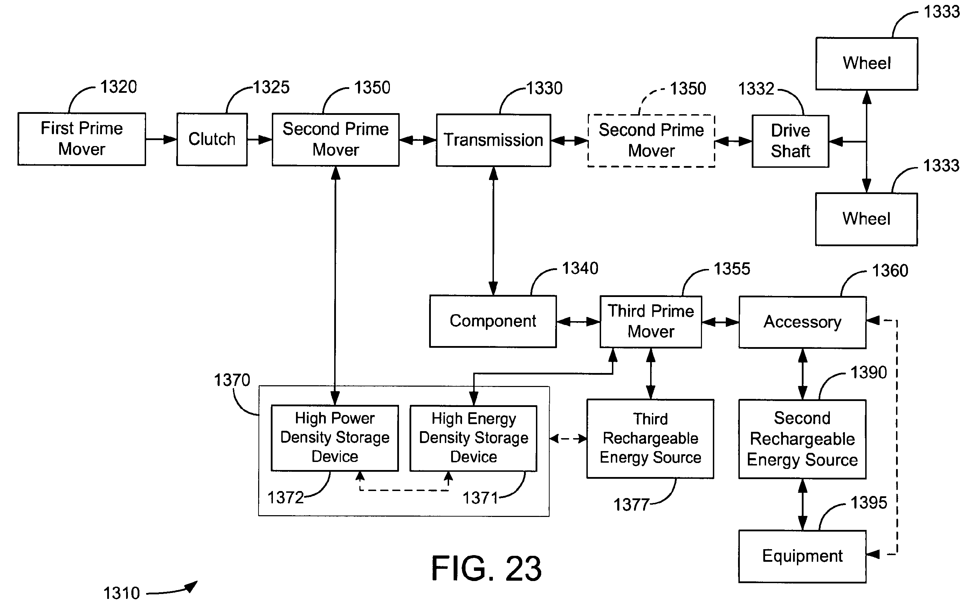

Referring now to FIG. 23, a hybrid vehicle drive system 1310 is shown according to yet another exemplary embodiment. System 1310 is similar to system 10 and includes a first prime mover 1320 (e.g., an internal combustion engine, such as a diesel fueled engine, etc.), a transmission 1330, a component 1340 (e.g., a power take-off (PTO), a transfer case, etc.), a second prime mover 1350 (e.g., a motor, such as an electric motor/generator), and an accessory 1360 (e.g., a hydraulic pump, such as a variable volume displacement pump, air compressor, etc.). However, in system 1310, second prime mover 1350 is mechanically coupled to transmission 1330. Transmission 1330 is mechanically coupled to component 1340, and component 1340 is a third prime mover 1355. Accessory 1360 is coupled to third prime mover 1355. System 1310 also includes a first rechargeable energy system or source 1370 (e.g., a battery, a bank of batteries, a fuel cell, a capacitive cell, or other energy storage devices).

Source 1370 can be a single source or a number of separate sources. In one embodiment, source 1370 is comprised of a source 1372 which is electrically coupled to mover 1350 and a source 1371 which is coupled to mover 1355. Sources 1371 and 1372 can be coupled to each other. Source 1371 is preferably a smaller energy density, higher power density unit (such as a lithium unit or capacitor based unit). Source 1372 is a higher energy density unit. Accessory 1360 can be a fluid motor and is coupled to a second rechargeable energy source 1390 (air tank, accumulator, etc.) and power on-board equipment 1395, as described above for system 10.

Third prime mover 1355 may transfer power to transmission 1330. If transmission 1330 is an automatic transmission with a torque converter, third prime mover 1335 may supply power to the pump section of transmission 1330 (also referred to as "live-PTO" gear) that is coupled to the crank shaft of prime mover 132 through clutch 1325, or to the turbine section of transmission 1330.

If third prime mover 1355 (as an electric motor/generator) transmits power to the turbine section of transmission 1330, then system 1310 can operate as a series/parallel hybrid system. By placing transmission 1330 in neutral, second prime mover 1350 can act as a generator, while third prime mover 1355 propels the vehicle. The use of second prime mover 1350 and third prime mover 1355 in series hybrid operation allows first prime mover 1320 to operate in its most efficient operating region (power, rpm, etc.).

System 1310 may operate in an all electric mode by disengaging clutch 1325 and turning off prime mover 1320. Second prime mover and/or third prime mover 1355 may be operated to provide propulsion. Third prime mover 1355 and/or second prime mover 1350 may operate until power requirements are exceeded. If third prime mover 1355 is operated alone and more power for drive shaft 1332 is needed, a control system may then shift transmission 1330 into gear after second prime mover 1350 is synchronized. Second prime mover 1350 then acts as a motor to provide additional propulsion. A control system may operate second prime mover 1350 to first synchronize speeds of certain internal components of transmission 1330 to minimize differences in speed of components of transmission 1330 to achieve a smooth transition during shifting into gear. If additional power is needed, or one or more rechargeable energy sources have low energy storage (e.g. state of charge below a threshold), clutch 1325 is engaged after first prime mover 1320 has been started and synchronized and system 1310 then becomes a parallel hybrid system. If the vehicle is at a constant speed, second prime mover 1350 may be used very little or turned off and third prime 1355 mover may be turned off and disconnected by a clutch within component 1340 (or between component 1340 and third prime mover 1355), resulting in very little additional friction or losses.

If third prime mover 1355 is optionally coupled to transmission 1330 between the gears of transmission 1330 and drive shaft 1332, third prime mover 1355 can supplement transmission 1330 (e.g., an automatic transmission) during shifts by increasing power to drive shaft 1332 and, therefore, to wheels 1333.

Accessory 1360 may optionally directly power equipment 1395 and second rechargeable energy source 1390 may be eliminated or not used.

A third rechargeable energy source 1377 can provide power for third prime mover 1355 and maybe recharged through third prime mover or optionally through a grid (plug-in) or an optional auxiliary power unit. Third rechargeable energy source 1377 may also be used to supply energy for external loads (exportable power) and for additional loads on a vehicles, such as an auxiliary electrically powered air conditioning and/or heating system, or other electrical loads.

First rechargeable energy source 1370 and third rechargeable energy source 1377 may optionally be coupled together, so that third rechargeable energy source may be in a series, or in parallel circuit (preferably parallel) with first rechargeable energy source 1370. This may be advantageous in supplying additional energy to second prime mover 1350 for extended operation, or in increasing the amount of power that rechargeable energy sources 1370 and 1373 can receive. First rechargeable energy source 1370 may also optionally assist third prime mover if both first and third energy sources 1370 and 1377 are connected.

When braking, second and/or third prime movers 1350 and 1355 may operate as a generator(s) to convert energy and store it in rechargeable energy source(s). If the vehicle is at a constant speed, second prime mover 1250 may be used very little or turned off and third prime 1255 mover may be turned off and disconnected by a clutch within transmission (or between component 1340 and third prime mover 1355), resulting in very little additional friction or losses.

In an alternative embodiment, movers 1350 and 1355 can be disposed next to each other before or after transmission 1330.

As described above in reference to FIG. 14 an additional prime mover (fourth prime mover) may be added and coupled to transmission 1330 through a second component. The additional prime mover may be needed if third prime mover 1355 can not supply sufficient power, or component 1340 cannot transmit sufficient power.

During stationary operations at the job-site, second prime mover 1350 can be operated to power component 1340 (e.g., to provide power to equipment 1395).

System 1310 may also operate only in a parallel configuration in which component 1340 engages the pump portion of transmission 1330. Third prime mover 1355 may provide additional power into transmission 1330 to supplement second prime mover 1350. Such operation may be beneficial if second prime mover 1350 does not have sufficient power. Second prime mover 1350 and third prime mover 1355 may also both provide power to accessory 1360. Such operation may be beneficial if accessory 1360 requires more power than second prime mover 1350 can provide or if power is limited by other elements between third prime mover 1355 and second prime mover 1350 (e.g., component 1340).

It is also important to note that the arrangement of the hybrid drive system components, as shown, are illustrative only. Although only a few embodiments of the present disclosure have been described in detail, those skilled in the art who review this disclosure will readily appreciate that many modifications are possible (e.g., variations in sizes, dimensions, structures, shapes and proportions of the various elements, values of parameters, mounting arrangements, materials, colors, orientations, etc.) without materially departing from the novel teachings and advantages of the subject matter recited herein. Further, the discussions related to optional clutches apply to other embodiments described with respect to other Figures. For example, although an APU and optional clutches are shown in various embodiments, they can be removed from the system without departing from the scope of the invention unless specifically recited in the claims. According to another example, although bidirectional arrows are shown in the Figures to represent power flow in two directions, the systems can be designed to have power flow in a single direction (e.g., certain bidirectional arrows can be replaced with unidirectional arrows without departing from the scope of the invention).

## Claims

1. A vehicle drive system for a vehicle, the vehicle drive system (310, 1210, 1310) for use with an internal combustion engine (320, 1220, 1320), a power take-off (340, 1240, 1340), and a transmission (330, 1230, 1330), the power take-off (340, 1240, 1340) being driven by the transmission (330, 1230, 1330), the vehicle drive system (310, 1210, 1310) comprising:
a first electric motor (350, 1250, 1350) mechanically in series with the internal combustion engine (320, 1220, 1320) and the transmission (330, 1230, 1330);
an electronic rechargeable energy source (370A, 1270, 1370) electrically coupled to the first electric motor (350, 1250, 1350);
a fluid motor (360, 1260, 1360) in mechanical communication with the power take-off (340, 1240, 1340); and **characterized in that** a rechargeable tank (390, 1290, 1390) is in fluid communication with the fluid motor (360, 1260, 1360), wherein the first electric motor (350, 1250, 1350) is configured to provide power through the transmission (330, 1230, 1330) and the power take-off (340, 1240, 1340) to the fluid motor (360, 1260, 1360), wherein the fluid motor (360, 1260, 1360) is configured to provide power to the rechargeable tank (390, 1290, 1390).

2. The vehicle drive system of claim 1, wherein the fluid motor (360, 1260, 1360) is an air or hydraulic pump/motor.

3. The vehicle drive system of claim 1, wherein the first electric motor (350, 1250, 1350) is between the internal combustion engine (320, 1220, 1320) and the transmission (330, 1230, 1330).

4. The vehicle drive system of claim 1, wherein the first electric motor (350, 1350) is between a drive shaft (332, 1332) and the transmission (330, 1330).

5. The vehicle drive system of claim 1, wherein the PTO (340, 1240, 1340), the first electric motor (350, 1250, 1350), and the hydraulic motor or the PTO (340, 1240, 1340) and first electric motor (350, 1250, 1350) are integrated into a single unit.

6. The vehicle drive system of claim 1, wherein the fluid motor (360, 1260, 1360) drives the drive shaft (332, 1232, 1332) through the PTO (340, 1240, 1340) to assist initial acceleration.

7. The vehicle drive system of claim 1, further comprising a second electric motor (1355) disposed in series with the first electric motor (1350), wherein the first electric motor (1350) is between the internal combustion engine (1320) and the transmission (1330), and the second electric motor (1355) is in series with the fluid motor (1360).

8. The vehicle drive system of claim 1, further comprising a second electric motor (1255) disposed in series with the first electric motor (1250), wherein the first electric motor (1250) is between the internal combustion engine (1220) and the transmission (1230), and the second electric motor (1255) is between the transmission (1230) and the drive shaft (1232).

9. The vehicle drive system of claim 1, further comprising a second motor (1255, 1355), wherein the second motor (1255, 1355) is either coupled mechanically in series with the transmission (1230, 1330) or in series with the fluid motor (1260, 1360).

10. The vehicle drive system of claim 1, wherein the electronic rechargeable energy source is a single battery system.

11. The vehicle drive system of claim 9, wherein the electronic rechargeable energy source (1270, 1370) includes a first source (1272, 1372) for the first motor (1250, 1350) and a second source (1271, 1272) for the second motor (1255).

12. The vehicle drive system of claim 11, wherein the second source (1271, 1371) has greater energy capacity than the first source (1272, 1372).

13. The vehicle drive system of claim 9, wherein the second motor (1355) is disposed between the fluid motor (1360) and the power take-off (1340).

14. The vehicle drive system of claim 9, wherein the second motor (1255) is disposed between the transmission (1230) and a drive shaft (1232).

## Patentansprüche

1. Fahrzeugantriebssystem für ein Fahrzeug, wobei das Fahrzeugantriebssystem (310, 1210, 1310) zur Verwendung mit einem Verbrennungsmotor (320, 1220, 1320), einem Nebenabtrieb (power take off, PTO) (340, 1240, 1340) und einem Getriebe (330, 1230, 1330) vorgesehen ist, wobei der Nebenabtrieb (340, 1240, 1340) von dem Getriebe (330, 1230, 1330) angetrieben wird und wobei das Fahrzeugantriebssystem (310, 1210, 1310) aufweist:
einen ersten Elektromotor (350, 1250, 1350), der mechanisch in Reihe mit dem Verbrennungsmotor (320, 1220, 1320) und dem Getriebe (330, 1230, 1330) angeordnet ist,
eine elektronische wiederaufladbare Energiequelle (370A, 1270, 1320), die elektrisch mit dem ersten Elektromotor (350, 1250, 1350) gekoppelt ist,
einen Fluidmotor (360, 1260, 1360) in mechanischer Verbindung mit dem Nebenabtrieb (340, 1240, 1340) und
**dadurch gekennzeichnet, dass** sich ein wiederbefüllbarer Tank (390, 1290, 1390) in Fluidverbindung mit dem Fluidmotor (360, 1260, 1360) befindet, wobei der erste Elektromotor (350, 1250, 1350) ausgestaltet ist, um über das Getriebe (330, 1230, 1330) und den Nebenabtrieb (340, 1240, 1340) Energie an den Fluidmotor (360, 1260, 1360) zu liefern, wobei der Fluidmotor (360, 1260, 1360) ausgestaltet ist, um Energie an den wiederbefüllbaren Tank (390, 1290, 1390) zu liefern.

2. Fahrzeugantriebssystem nach Anspruch 1, bei dem der Fluidmotor (360, 1260, 1360) eine Luft-Pumpe/ein Luft-Motor oder eine hydraulische Pumpe/ein hydraulischer Motor ist.

3. Fahrzeugantriebssystem nach Anspruch 1, bei dem sich der erste Elektromotor (350, 1250, 1350) zwischen dem Verbrennungsmotor (320, 1220, 1320) und dem Getriebe (330, 1230, 1330) befindet.

4. Fahrzeugantriebssystem nach Anspruch 1, bei dem sich der erste Elektromotor (350, 1350) zwischen einer Antriebswelle (332, 1332) und dem Getriebe (330, 1330) befindet.

5. Fahrzeugantriebssystem nach Anspruch 1, bei dem der Nebenabtrieb (340, 1240, 1340), der erste Elektromotor (350, 1250, 1350) und der hydraulische Motor oder der Nebenabtrieb (340, 1240, 1340) und der erste Elektromotor (350, 1250, 1350) in eine einzige Einheit integriert sind.

6. Fahrzeugantriebssystem nach Anspruch 1, bei dem der Fluidmotor (360, 1260, 1360) die Antriebswelle (332, 1232, 1332) über den Nebenabtrieb (340, 1240, 1340) antreibt, um eine Anfangsbeschleunigung zu unterstützen.

7. Fahrzeugantriebssystem nach Anspruch 1, das ferner einen zweiten Elektromotor (1355) aufweist, der in Reihe mit dem ersten Elektromotor (1350) angeordnet ist, wobei sich der erste Elektromotor (1350) zwischen dem Verbrennungsmotor (1320) und dem Getriebe (1330) befindet und der zweite Elektromotor (1355) in Reihe mit dem Fluidmotor (1360) angeordnet ist.

8. Fahrzeugantriebssystem nach Anspruch 1, das ferner einen zweiten Elektromotor (1355) aufweist, der in Reihe mit dem ersten Elektromotor (1350) angeordnet ist, wobei sich der erste Elektromotor (1350) zwischen dem Verbrennungsmotor (1320) und dem Getriebe (1330) befindet und sich der zweite Elektromotor (1355) zwischen dem Getriebe (1230) und der Antriebswelle (1232) befindet.

9. Fahrzeugantriebssystem nach Anspruch 1, das ferner einen zweiten Motor (1255, 1355) aufweist, wobei der zweite Motor (1255, 1355) entweder mechanisch in Reihe mit dem Getriebe (1230, 1330) oder in Reihe mit dem Fluidmotor (1260, 1360) gekoppelt ist.

10. Fahrzeugantriebssystem nach Anspruch 1, bei dem die elektronische wiederaufladbare Energiequelle ein einziges Batteriesystem ist.

11. Fahrzeugantriebssystem nach Anspruch 9, bei dem die elektronische wiederaufladbare Energiequelle (1270, 1370) eine erste Quelle (1272, 1372) für den ersten Motor (1250, 1350) und eine zweite Quelle (1271, 1272) für den zweiten Motor (1255) aufweist.

12. Fahrzeugantriebssystem nach Anspruch 11, bei dem die zweite Quelle (1271, 1371) eine größere Energiekapazität als die erste Quelle (1272, 1372) hat.

13. Fahrzeugantriebssystem nach Anspruch 9, bei dem der zweite Motor (1355) zwischen dem Fluidmotor (1360) und dem Nebenantrieb (1340) angeordnet ist.

14. Fahrzeugantriebssystem nach Anspruch 9, bei dem der zweite Motor (1255) zwischen dem Getriebe (1230) und einer Antriebswelle (1232) angeordnet ist.

## Revendications

1. Système d'entraînement de véhicule destiné à un véhicule, le système d'entraînement de véhicule (310, 1210, 1310) étant destiné à être utilisé avec un moteur à combustion interne (320, 1220, 1320), une prise de force (340, 1240, 1340), et une transmission (330, 1230, 1330), la prise de force (340, 1240, 1340) étant entraînée par la transmission (330, 1230, 1330), le système d'entraînement de véhicule (310, 1210, 1310) comprenant :
un premier moteur électrique (350, 1250, 1350) mécaniquement en série avec le moteur à combustion interne (320, 1220, 1320) et la transmission (330, 1230, 1330) ;
une source d'énergie électronique rechargeable (370A, 1270, 1370) électriquement reliée au premier moteur électrique (350, 1250, 1350) ;
un moteur à fluide (360, 1260, 1360) en communication mécanique avec la prise de force (340, 1240, 1340) ; et
**caractérisé en ce qu'**un réservoir rechargeable (390, 1290, 1390) est en communication de fluide avec le moteur à fluide (360, 1260, 1360), le premier moteur électrique (350, 1250, 1350) étant configuré pour fournir de l'énergie, par le biais de la transmission (330, 1230, 1330) et de la prise de force (340, 1240, 1340), au moteur à fluide (360, 1260, 1360), le moteur à fluide (360, 1260, 1360) étant configuré pour fournir de l'énergie au réservoir rechargeable (390, 1290, 1390).

2. Système d'entraînement de véhicule selon la revendication 1, dans lequel le moteur à fluide (360, 1260, 1360) est une pompe/un moteur pneumatique ou hydraulique.

3. Système d'entraînement de véhicule selon la revendication 1, dans lequel le premier moteur électrique (350, 1250, 1350) se trouve entre le moteur à combustion interne (320, 1220, 1320) et la transmission (330, 1230, 1330).

4. Système d'entraînement de véhicule selon la revendication 1, dans lequel le premier moteur électrique (350, 1350) se trouve entre un arbre d'entraînement (332, 1332) et la transmission (330, 1330).

5. Système d'entraînement de véhicule selon la revendication 1, dans lequel la prise de force (340, 1240, 1340), le premier moteur électrique (350, 1250, 1350), et le moteur hydraulique, ou la prise de force (340, 1240, 1340) et le premier moteur électrique (350, 1250, 1350) sont intégrés en une seule unité.

6. Système d'entraînement de véhicule selon la revendication 1, dans lequel le moteur à fluide (360, 1260, 1360) entraîne l'arbre d'entraînement (332, 1232, 1332) par le biais de la prise de force (340, 1240, 1340) afin de faciliter l'accélération initiale.

7. Système d'entraînement de véhicule selon la revendication 1, qui comprend en outre un second moteur électrique (1355) disposé en série avec le premier moteur électrique (1350), le premier moteur électrique (1350) se trouvant entre le moteur à combustion interne (1320) et la transmission (1330), et le second moteur électrique (1355) étant en série avec le moteur à fluide (1360).

8. Système d'entraînement de véhicule selon la revendication 1, qui comprend en outre un second moteur électrique (1255) disposé en série avec le premier moteur électrique (1250), le premier moteur électrique (1250) se trouvant entre le moteur à combustion interne (1220) et la transmission (1230), et le second moteur électrique (1255) se trouvant entre la transmission (1230) et l'arbre d'entraînement (1232).

9. Système d'entraînement de véhicule selon la revendication 1, qui comprend en outre un second moteur (1255, 1355), dans lequel le second moteur (1255, 1355) est soit relié mécaniquement en série avec la transmission (1230, 1330), soit en série avec le moteur à fluide (1260, 1360).

10. Système d'entraînement de véhicule selon la revendication 1, dans lequel la source d'énergie électronique rechargeable est un système à batterie unique.

11. Système d'entraînement de véhicule selon la revendication 9, dans lequel la source d'énergie électronique rechargeable (1270, 1370) comprend une première source (1272, 1372) destinée au premier moteur (1250, 1350) et une seconde source (1271, 1272) destinée au second moteur (1255).

12. Système d'entraînement de véhicule selon la revendication 11, dans lequel la seconde source (1271, 1371) possède une capacité énergétique supérieure à celle de la première source (1272, 1372).

13. Système d'entraînement de véhicule selon la revendication 9, dans lequel le second moteur (1355) est disposé entre le moteur à fluide (1360) et la prise de force (1340).

14. Système d'entraînement de véhicule selon la revendication 9, dans lequel le second moteur (1255) est disposé entre la transmission (1230) et un arbre d'entraînement (1232).
